(19) Europäisches Patentamt / European Patent Office / Office européen des brevets

(11) **EP 4 542 271 B1**

(12) **EUROPEAN PATENT SPECIFICATION**

(45) Date of publication and mention of the grant of the patent:
**25.03.2026 Bulletin 2026/13**

(21) Application number: **24206900.3**

(22) Date of filing: **16.10.2024**

(51) International Patent Classification (IPC):
$G02B\ 6/028$ (2006.01)    $G02B\ 6/036$ (2006.01)

(52) Cooperative Patent Classification (CPC):
**G02B 6/03611; G02B 6/0281; G02B 6/0365**

(54) **SINGLE MODE OPTICAL FIBER OPTIMIZED TO OPERATE IN O AND E BAND, AND CORRESPONDING OPTICAL TRANSMISSION SYSTEM**

FÜR DEN BETRIEB IM O- UND E-BAND OPTIMIERTE EINZELMODUSGLASFASER UND ZUGEHÖRIGES OPTISCHES ÜBERTRAGUNGSSYSTEM

FIBRE OPTIQUE MONOMODE OPTIMISÉE POUR FONCTIONNER EN BANDE O ET E, ET SYSTÈME DE TRANSMISSION OPTIQUE CORRESPONDANT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **18.10.2023 FR 2311265**

(43) Date of publication of application:
**23.04.2025 Bulletin 2025/17**

(73) Proprietor: **Draka Comteq France SAS 89100 Paron (FR)**

(72) Inventors:
• **DE MONTMORILLON, Louis-Anne**
**89100 Paron (FR)**
• **SILLARD, Pierre**
**89100 Paron (FR)**
• **PROVOST, Lionel**
**89100 Paron (FR)**

(74) Representative: **Vidon Brevets & Stratégie 16B, rue de Jouanet 35700 Rennes (FR)**

(56) References cited:
WO-A1-02/27367        US-A1- 2011 286 710
US-A1- 2017 031 089    US-B1- 6 301 422

**Description**

**Technical Field**

The present disclosure relates to single-mode optical fibers used in optical transmission systems, and optical transmission systems comprising such single mode fibers. More specifically, the present invention relates to single-mode optical fibers, which are optimized to operate in O and E wavelength bands.

**State of Art**

Telecommunication systems require optical fibers, which are capable of transmitting signals for a long distance without degradation. Such optical-fiber transmission systems often use single-mode optical fibers (SMFs), such as, for example, so-called "standard" single-mode fibers (SSMFs), which are used in terrestrial transmission systems. Indeed, a single-mode optical fiber (SMF) allows to obtain a lower attenuation of the optical signal in comparison with a multi-mode optical fiber (MMF), and therefore, is more suitable for long-distance transmissions. Furthermore, as indicated by its name, a multimode fiber presents a plurality of modes, each with different speeds, which induces a limited bandwidth, contrary to a single-mode optical fiber which theoretically presents an unlimited bandwidth, more suitable for long-distance transmissions.

Furthermore, to facilitate compatibility between optical systems from different manufacturers, the International Telecommunication Union (ITU) has defined several standards with which a standard optical transmission fiber should comply. Among these standards, the ITU-T G. 652 recommendation (Last revision of November 2016) describes the characteristics of single-mode fiber and cable-based networks, which can answer the growing demand for broadband services. The ITU-T G.652 recommendation (herein after "G.652") has several attributes (i.e. A, B, C and D) defining the fiber attributes of a single mode optical fiber. The ITU-T G.657 (herein after "G.657") recommendation focuses more precisely on bending-loss insensitive single-mode fibers. More particularly, the attributes of the G.657.A1 and G.657.A2 (Last revision of November 2016) are presented below.

Different optical wavelength communication bands can be used to transmit information through an optical fiber. These bands correspond to a wavelength region where optical fibers have smaller transmission losses. This low-loss wavelength region ranges from 1260 nm to 1625 nm, and is divided into five wavelength bands referred to as the O-, E-, S-, C- and L-bands. Presently, most of the single mode optical fibers are operating at wavelength ranging from typically 1260nm to 1625nm, and more particularly in the O-band (1260-1360nm) and the C&L-bands (1530-1625nm), which is the case of G.652 and G.657 optical fibers.

More particularly, the optical performances of G.657 category A are: a Mode Field Diameter (MFD) for a 1310nm wavelength comprised between 8.6 and 9.2$\mu$m, a cable Cutoff below 1260nm, and a Zero Dispersion Wavelength (ZDW) comprised between 1300 and 1324nm (such ZDW is optimal for the use of fibers in the O-band), and a Zero Dispersion Slope (ZDS) lower or equal to 0.092 ps/(nm$^2$.km).

The maximum accepted macrobend losses of G.657 fibers are:

**[Table 1]**

|  | G.657.A1 | G.657.A2 |
|---|---|---|
| 10 turns at radius of 15 mm, measured at 1550 nm (R15BL at 1550) | 0.25 dB | 0.03 dB |
| 10 turns at radius of 15 mm, measured at 1625 nm (R15BL at 1625) | 1.0 dB | 0.1 dB |
| 1 turn at radius of 10 mm, measured at 1550 nm (R15BL at 1550) | 0.75 dB | 0.1 dB |
| 1 turn at radius of 10 mm, measured at 1625 nm (R15BL at 1625) | 1.0 dB | 0.2 dB |
| 1 turn at radius of 7.5 mm, measured at 1550 nm (R15BL at 1550) |  | 0.5 dB |
| 1 turn at radius of 7.5 mm, measured at 1625 nm (R15BL at 1625) |  | 1.0 dB |

The international applications WO2015/092464 and WO2019/122943 disclose examples of optical fibers with Zero Dispersion wavelength between 1300 and 1324nm as according to G.652 and G.657A.

However, with the long-term trend towards more and more expanding the transmission capacities, as data traffic keeps growing at a large rate, there is a need to optimize the use of the wavelengths at the top of the O-band used for optical fiber communications because the chromatic dispersion will be too high at these wavelengths for existing equipment. More particularly, Metro Wave Division Multiplexing (MWDM) systems with 25G transceivers, for example, are expected to operate in both O and E bands, from 1268 to 1375nm, and need chromatic dispersion ranging from -9.5 to +3 ps/(nm$^2$.km):

this is not achieved with today G.652 and G657.A fibers because the zero-dispersion wavelength is ranging from 1300 to 1324nm. Therefore, there is a need to find an optical fiber design able to answer this need.

Publications US 2011/286710 A1, WO 02/27367 A1 and US 6 301 422 B1 disclose prior art optical fibers.

## Summary of the invention

These objectives are achieved by the invention, which concerns a single-mode optical fiber comprising:

- a core having a refractive index n, wherein the core comprises a region in which the value of n decreases from a value $n_0$ at a radius $r_0$, to a value $n_2$ at a radius $r_1$; and
- a cladding having a refractive index n', said cladding comprising:

  ○ a first layer of cladding wherein the refractive index n' is equal to $n_2$; and
  ○ a second layer of cladding wherein the refractive index n' is equal to a value $n_3$ lower than $n_2$;
  ○ a third layer of cladding wherein the refractive index n' is equal to a value $n_4$ higher than $n_3$;

wherein the core radius $r_1$ is comprised between 2.5 $\mu$m and 5.5 $\mu$m; and
wherein a refractive-index difference $\Delta n_0 = n_0 - n_4$ is higher than $5.8 \times 10^{-3}$; and
wherein a refractive-index difference $\Delta n_2 = n_2 - n_4$ is between $1 \times 10^{-3}$ and $2.5 \times 10^{-3}$; and
wherein a refractive-index difference $\Delta n_3 = n_3 - n_4$ is lower than 0
wherein the refractive-index profile of the core and cladding is defined by the following profile parameters:

$$K_1 = V_{11} - 5,85 \times V_{01}$$

$$K_2 = V_{02} + 0,65 \times V_{01}$$

$$K_3 = V_{03} - 5 \times K_2$$

where
$V_{01}$ ($\mu$m) is a surface integral of the core;
$V_{11}$ ($\mu$m$^2$) is a volume integral of the core;
$V_{02}$ ($\mu$m) is a surface integral of the first layer of cladding;
$V_{03}$ ($\mu$m) is a surface integral of the second layer of cladding;
and wherein said parameters respect the following inequalities:

$$-59 < K_1 < -47$$

$$18 < K_2 < 24$$

$$-133 < K_3 < -118$$

Thus, this invention allows to obtain optical fibers operating optimally in the O and E wavelength bands, thus with a Chromatic Dispersion (CD) slightly shifted in comparison to the G.652 and G.657 fibers but presenting the same optical performances. More particularly, the optical fiber according to the invention presents the same properties as the G.657.A fibers: a MFD-1310 at 9.0$\mu$m, a cable Cutoff below 1260nm and low bend losses; except for the ZDW which is comprised between 1340 and 1360nm. Therefore, the optical fiber according to the invention allow to maintain the chromatic dispersion between -9 and +3 ps/(nm.km) in the range from 1268 to 1375nm.

Therefore, the invention is ideal for use in Metro Wave Division Multiplexing (MWDM) systems. These systems allow to double the number of wavelength channels under the same conditions as in the commonly used Coarse Wavelength Division Multiplexing (CWDM) systems, by reducing the wavelength spacing of CWDM from 20nm to 10nm.

Ultimately, Metro Wave Division Multiplexing (MWDM) is proposed to meet the urgent needs of 5G commercialization. And, as it only makes parameter adjustments based on the mature CWDM technology, therefore, the industry can reuse the CWDM modules production process, and the industry chain can quickly meet market demand.

According to a particular embodiment, the third layer of cladding is composed of silica. According to a particular aspect of the invention, the profile of the refractive index or the core is trapezoidal, with a ratio comprised between 0 and 1, and preferably between 0,05 and 0,95, wherein said ratio is equal to $r_0/r_1$.

According to another particular aspect of the invention, the profile of the refractive index or the core presents rounded edges.

According to a particular embodiment, the profile of the refractive index of the core presents an inner central depressed zone, from the center of the core to the radius $r_D$, wherein $r_D$ is lower than $r_1$, and wherein the refractive index n of the core, presents a minimum value at the center of the core equal to $n_{0D}$, wherein $n_{0D}$ is lower than $n_0$.

According to a particular aspect of the invention, the region with decrease of refractive index is obtained by gradually changing a concentration of at least two dopants.

According to an embodiment of the invention, the at least two dopants are chosen among the following elements and/or molecules:

- germanium oxide ($GeO_2$);
- fluorine (F);
- phosphorus oxide ($P_XO_Y$);
- boron oxide ($B_XO_Y$);
- aluminum oxide ($Al_2O_3$).

According to a particular aspect of the invention, said optical fiber has a Chromatic Dispersion comprised between -9 and +3 ps/(nm.km) in the range of wavelength from 1268 to 1375nm.

Therefore, the Chromatic Dispersion is slightly shifted in comparison with the G.562 and G.567 optical fibers, which allows to operate in both the O- and E-wavelength bands.

According to an embodiment of the invention, said optical fiber has a Mode Field Diameter (MFD) at a 1310nm wavelength which is comprised between 8,6 and 9,2$\mu$m and preferably at 9$\mu$m.

According to a particular aspect of the invention, said optical fiber has a Cable cut-off wavelength comprised between 1170nm and 1260nm.

According to a particular aspect of the invention, the optical fiber has a Zero Dispersion Wavelength comprised between 1340 and 1360nm.

The invention also relates to an optical fiber transmission system which comprises at least one single-mode optical fiber as described previously.

Therefore, the range of wavelength which can be used by this system is wider than the ones available for the optical communication system of the prior art. In fact, it can operate in the O- and E-wavelength bands (from 1268 to 1375nm) using, for example, Metro Wave Division Multiplexing (MWDM) with a 25Gb/s transceiver.

According to an embodiment of the invention, the optical fiber transmission system has a maximum Transmitter Dispersion Penalty of 1,5dB.

**Description of the figures**

The present disclosure can be better understood with reference to the following description and drawings, given by way of example and not limiting the scope of protection, and in which:

**[Fig.1]** depicts an optical fiber according to the claimed invention;

**[Fig.2]** depicts a diagrammatic representation of the evolution of the refractive index (a) of the core and cladding of an optical fiber according to figure 1, according to a first embodiment of the claimed invention, together with a sectional view (b) of such optical fiber;

**[Fig 3]** depicts a diagrammatic representation of the evolution of the refractive index of the core and cladding of an optical fiber according to figure 1 according to a second embodiment of the claimed invention, the refractive index profile of the core comprising rounded edges;

**[Fig.4]** depicts a diagrammatic representation of the evolution of the refractive index of the core and cladding of an optical fiber according to figure 1 according to a third embodiment of the claimed invention, the refractive index profile of the core comprising a depressed central zone;

**[Fig.5]** depicts a diagrammatic representation of the evolution of the refractive index of the core and cladding of an optical fiber according to figure 1 according to a fourth embodiment of the claimed invention, the refractive index profile of the core comprising a depressed central zone, and rounded edges;

**[Fig.6]** depicts a diagrammatic representation of a transmission system comprising an optical fiber according to the invention.

The components in the figures are not necessarily to scale, emphasis instead being placed upon illustrating the principles of the invention.

**Detailed description of embodiments of the invention**

The general principle of the invention relies on a single-mode optical fiber configured to be implemented in optical transmission systems operating in a range of wavelengths comprised between 1260nm and 1625nm. More particularly, the invention relies on a single-mode optical fiber optimized to be used in the highest wavelengths of the O-band and even in the E-band (for example, around 1375nm). Indeed, the specific characteristics of the single-mode optical fiber according to the invention allow to obtain a Chromatic Dispersion (CD) slightly shifted in comparison to the G.652 and G.657 fibers but presenting the same optical performances. More particularly, the single-mode optical fiber according to the invention presents a ZDW comprised between 1340 and 1360nm, allowing to maintain the Chromatic Dispersion (CD) between -9 and +3 ps/(nm.km) in the range from 1268 to 1375nm. Such ZDW and all other optical parameters are obtained thanks to specific characteristics of the different elements composing the fiber. Furthermore, as for G.652 and G.657 fibers, the optical fiber according to the invention has a Mode Field Diameter (MFD) at a 1310nm wavelength which is comprised between 8,6 and $9,2\mu m$ and preferably at $9\mu m$. The optical fiber also has a Cable cut-off wavelength comprised between 1170nm and 1260nm. Thus, this optical fiber presents similar characteristics to the G.652 and G.657 fibers, but is further optimized for a use in the high O-band wavelengths.

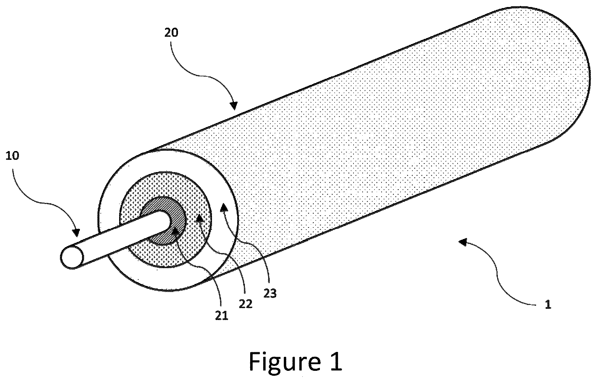

As illustrated in **[Fig.1],** the optical fiber 1 according to the invention comprises a core 10 which is the inner light-carrying member of the fiber, and a cladding 20 which serves to confine the light to the core. The cladding comprises three layers of cladding: a first layer of cladding 21 also referred to as an "intermediate cladding", a second layer of cladding 22 also referred to as a "trench", and a third layer of cladding 23 also referred to as "external cladding".

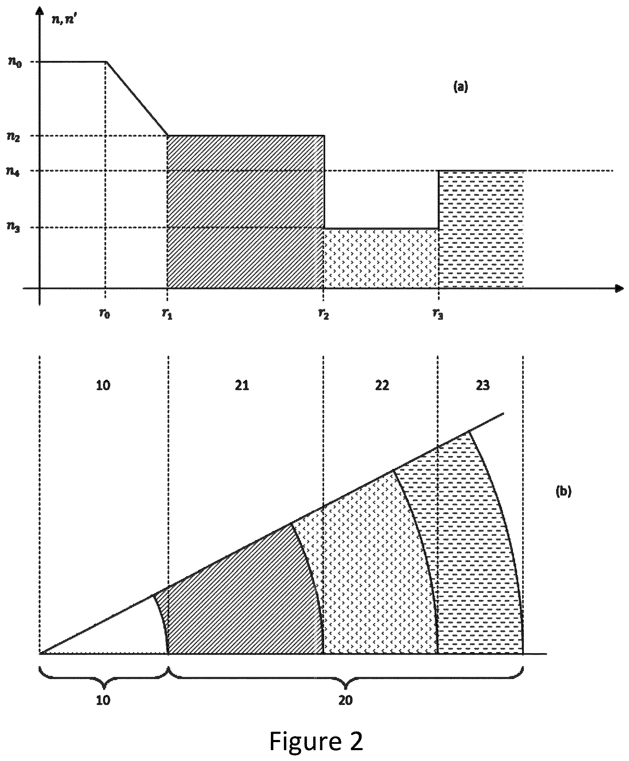

The core 10 is defined by a radius r and a refractive index n varying with radius r, while the cladding is defined be a radius r' and a refractive index n' varying with radius r'. More particularly, **[Fig.2]** represents the index profile of an optical fiber on the above graph (a) and a sectional view of this optical fiber in the part below (b), according to the invention. In the part (a) of this figure is represented the evolution of the refractive index (n, n') of the core 10 and cladding 20 in function of the radius (r, r') from the center of the core 10.

According to the invention, the **core** 10 is defined with an external radius $r_1$. The core 10 comprises a first region, from its center (r=0) to a radius $r_0$. In the embodiment illustrated in **[Fig.2],** the first region of the core presents a constant refractive index equal to $n_0$. The optical core 10 further comprises a second region, from radius $r_0$ to radius $r_1$, with a decreasing refractive index, and with a refractive index $n_2$ at radius $r_1$. In the embodiment illustrated in **[Fig.2],** the index of the core in the second region decreases from $n_0$ to $n_2$. Furthermore, in the exemplary embodiment of **[Fig.2],** the radiuses and indices of the core are defined as follow:

- 
$$0.180\mu m \leq r_0 \leq 3\mu m$$

- 
$$2.5\mu m \leq r_1 \leq 5.5\mu m$$

- 
$$r_0 \leq r_1$$

- $\Delta n_0 > 0.0058$ with $\Delta n_0$ being the refractive index difference between the first region of the core and the third layer of cladding: $\Delta n_0 = n_0 - n_4$
- $1\times 10^{-3} \leq \Delta n_2 \leq 2.5\times 10^{-3}$ with $\Delta n_2$ being the difference between the index at $r_1$ (in the outer part of the second region of the core) and the index of the third layer of cladding: $\Delta n_2 = n_2 - n_4$

More particularly, according to a particular embodiment of the invention, $\Delta n_0$ is comprised between 0.0058 and 0.0085.

In addition, the radiuses parameters of the core 10 can further be defined as follows: $0 \leq r_0 \leq r_1$ with the ratio between the radius of the first region and the second region of the cladding being defined as follows: ratio = $r_0/r_1$, with $0 \leq$ ratio $\leq 1$, and preferably, $0.05 \leq$ ratio $\leq 0.95$.

Thus, the core 10 also presents a radius equivalent $r_{eq}$ defined as follows:

$$r_{eq} = r_1 \text{ x } (1+\text{ratio})/2,$$

with $1.5\mu m \leq r_{eq} \leq 3.5\mu m$

Furthermore, the profile of the refractive index of the core 10 can be trapezoidal or rectangular, with edges which can be rounded or not.

The values of index and radius contribute to obtaining a single-mode optical fiber optimized for operating in the high wavelengths of the O-band. Indeed, the core radius of the single-mode optical fiber according to the invention is smaller than the prior art's ones, which allow to obtain a ZDW around 1350nm.

The surface integral of the core 10 can be expressed by the following formula:

$$V_{01} = \int_0^{r_1} \Delta n(r) \cdot dr \approx \frac{r_1}{2} \cdot [\Delta n_0 \cdot (1 + ratio) + \Delta n_2 \cdot (1 - ratio)]$$

In this formula, the index deltas ($\Delta n_0$, $\Delta n_2$) are multiplied by 1000, the unit of $r_1$ is the $\mu m$, and therefore, the unit of $V_{01}$ is the $\mu m$.

In a particular embodiment of the invention: $16\mu m \leq V_{01} \leq 25\mu m$.

And the volume integral of the core 10 can be expressed by the following formula:

$$V_{11} = 2 \cdot \int_0^{r_1} \Delta n(r) \cdot r \cdot dr \approx \frac{r_1^2}{3} \cdot [\Delta n_0 \cdot (1 + ratio + ratio^2) + \Delta n_2 \cdot (2 - ratio - ratio^2)]$$

In this formula, the index deltas ($\Delta n_0$, $\Delta n_2$) are multiplied by 1000, the unit of $r_1$ is the $\mu m$, and therefore, the unit of $V_{11}$ is the $\mu m^2$.

In a particular embodiment of the invention: $42\ \mu m^2 \leq V_{11} \leq 93\ \mu m^2$.

The **first layer of cladding** 21 or "intermediate cladding" is defined with a radius $r_2$ and a constant refractive index equal to $n_2$.

According to an embodiment of the invention, the radius of the first layer of cladding 21 is preferably defined as follows: $7.8\mu m \leq r_2 \leq 9\mu m$.

The surface integral of the first layer of cladding 21 can be expressed by the following formula:

$$V_{02} = \int_{r_1}^{r_2} \Delta n(r) \cdot dr \approx (r_2 - r_1) \cdot \Delta n_2$$

In this formula, the index delta $\Delta n_2$ is multiplied by 1000, the unit of $r_1$ and $r_2$ is the $\mu m$, and therefore, the unit of $V_{02}$ is the $\mu m$.

In a particular embodiment of the invention: $3\mu m \leq V_{02} \leq 12\mu m$.

The volume integral of the first layer of cladding 21 can be expressed by the following formula:

$$V_{12} = 2 \cdot \int_{r_1}^{r_2} \Delta n(r) \cdot r \cdot dr \approx (r_2^2 - r_1^2) \cdot \Delta n_2$$

In this formula, the index delta $\Delta n_2$ is multiplied by 1000, the unit of $r_1$ and $r_2$ is the $\mu m$, and therefore, the unit of $V_{12}$ is the $\mu m^2$.

In a particular embodiment of the invention: $50\mu m^2 \leq V_{12} \leq 130\ \mu m^2$.

The **second layer of cladding** 22 or "trench" is defined with a radius $r_3$ and a constant refractive index $n_3$, the index of the second layer of cladding being defined as follows: $\Delta n_3 \leq 0$, with $\Delta n_3$ being the refractive-index difference between the second layer of cladding 22 and the third layer of cladding 23: $\Delta n_3 = n_3 - n_4$

Furthermore, according to a particular embodiment of the invention, the radius of the second layer of cladding 22 is preferably defined as follows: $10.8\mu m \leq r_3 \leq 13.2\mu m$.

The surface integral of the second layer of cladding 22 can be expressed by the following formula:

$$V_{03} = \int_{r_2}^{r_3} \Delta n(r) \cdot dr \approx (r_3 - r_2) \cdot \Delta n_3$$

In this formula, the index delta $\Delta n_3$ is multiplied by 1000, the unit of $r_2$ and $r_3$ is the $\mu m$, and therefore, the unit of $V_{03}$ is the $\mu m$.

In a particular embodiment of the invention: -30 $\mu$m $\leq$ V$_{03}$ $\leq$ -14 $\mu$m.

The volume integral of the second layer of cladding 22 can be expressed by the following formula:

$$V_{13} = 2 \cdot \int_{r_2}^{r_3} \Delta n(r) \cdot r \cdot dr \approx (r_3{}^2 - r_2{}^2) \cdot \Delta n_3$$

In this formula, the index delta $\Delta n_3$ is multiplied by 1000, the unit of $r_2$ and $r_3$ is the $\mu$m, and therefore, the unit of $V_{13}$ is the $\mu$m$^2$.

In a particular embodiment of the invention: -653 $\mu$m$^2$ $\leq$ V$_{13}$ $\leq$ -272 $\mu$m$^2$.

Thus, the single-mode optical fiber 1 according to the invention requires a trench assisted design with a lower refractive index compared to the second layer of cladding, to reach the targeted performances, i.e. a ZDW comprised between 1340 and 1360nm and a shifted CD and the same other parameters as G.652 and G.657 fibers.

Finally, the **third layer of cladding** 23 or "external cladding" is defined with a constant refractive index $n_4$ which respects the following inequality: $n_4 \geq n_3$.

This third layer of cladding 23 participates in creating a trench in the second layer of cladding 22, and to protect the inner layers of cladding 20 and the core 10.

The third layer of cladding 23 is preferably composed of almost pure silica, and preferably pure silica.

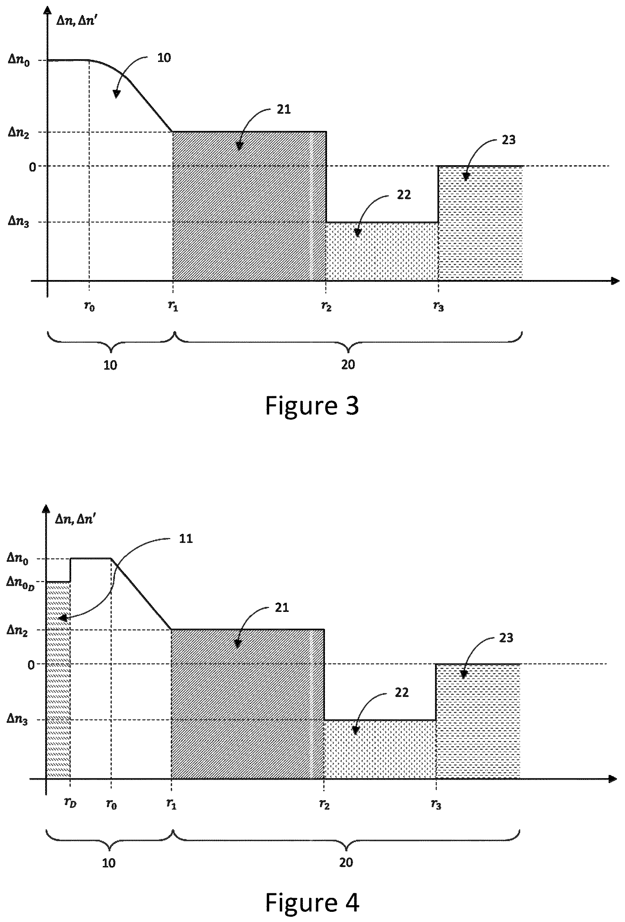

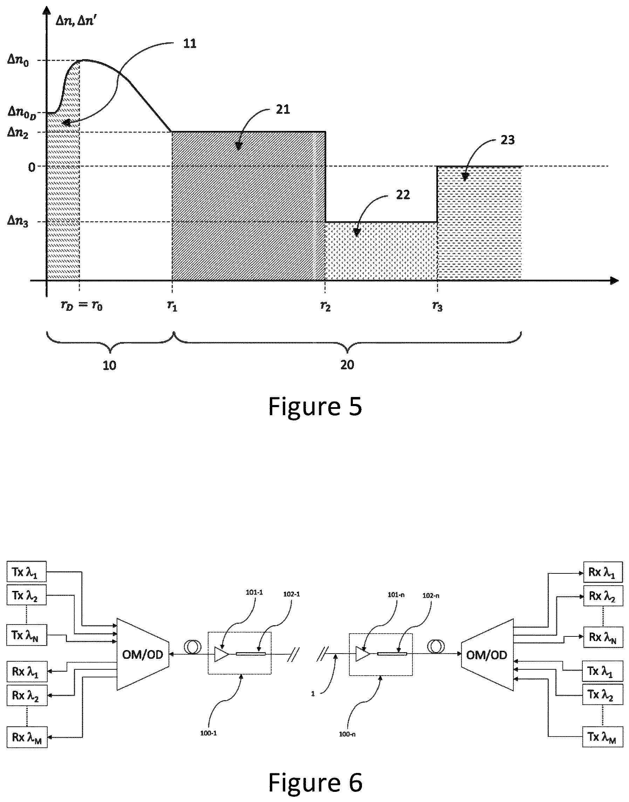

Hereinafter are described specific embodiments of the invention. More particularly, the invention can present specific refractive-index profiles which are described in relation with **[Fig.2], [Fig.3], [Fig.4]** and **[Fig.5],** which are not limiting examples.

According to the invention, the refractive-index profile of the core 10 and the cladding 20 of the optical fiber 1 are described in relation with profile parameters (K$_1$, K$_2$, K$_3$), which are defined as follows:

$$K_1 = V_{11} - 5,85 \times V_{01}$$

$$K_2 = V_{02} + 0,65 \times V_{01}$$

$$K_3 = V_{03} - 5 \times K_2$$

In these formulas, the unit of $V_{01}$, $V_{02}$ and $V_{03}$ is the $\mu$m, while the unit of $V_{11}$ is the $\mu$m$^2$. Therefore, the formula of K$_1$ can also be expressed: K$_1$ = V$_{11}$ - 5,85($\mu$m) x V$_{01}$.

These profile parameters respect the following inequalities:

$$-59 < K_1 < -47$$

$$18 < K_2 < 24$$

$$-133 < K_3 < -118$$

Thus, these profile parameters allow to better define the refractive-index profile of the optical fiber 1, and also allow to determine the limits of these profiles. Among the profiles defined by these profile parameters are angular profiles with a rectangular or trapezoidal shape, as illustrated by **[Fig.2],** rounded profiles with a global rectangular or trapezoidal shape, as illustrated by **[Fig.3],** and also profiles comprising a core with an inner central depressed zone 11 with either angular of rounded edges, as illustrated by **[Fig.4]** and **[Fig.5].**

Thus, as illustrated by **[Fig.3]** the index profile of the core 10 can be rounded. In such a case, the first region of the core, with a radius $r_0$, ends exactly at the beginning of the refractive-index decrease, i.e. before the rounded part of the profile.

The cladding 20 of the optical fiber 1 can also present a profile with rounded edged. Such embodiment is not represented in the figures.

**[Fig.4]** represents another embodiment of the invention, in which the index profile of the core 10 comprises an inner central depressed zone 11, in the first region of the core. This figure represents an angular profile.

More particularly, as illustrated in **[Fig.4],** this inner central depressed zone 11 extends from the center of the core (r=0) to a radius $r_D$, with $r_D < r_0$. In this inner central depressed zone 11, the refractive index n of the core, presents a minimum value at the center of the core equal to $n_{0D}$, with $n_{0D} < n_0$, or in other words, $\Delta n_{0d} < \Delta n_0$ with $\Delta n_{0D} = n_{0D} - n_4$.

**[Fig.5]** represents another embodiment of the invention, in which the index profile of the core (10) is rounded and comprises an inner central depressed zone (11). Thus, all the profile of the core (10), with the inner central depressed zone (11), can present rounded edges. In this case, the inner central depressed zone (11), with a radius $r_D$, ends when the maximum value ($n_0$, or $\Delta n_0$) of the core refractive index (n) is reached. In the embodiment represented in **[Fig.5]**, $r_D = r_0$ because the maximum value of n or $\Delta n$ (which is $n_0$, or $\Delta n_0$) is only met at a unique point on the graph.

In an embodiment of the invention, the second region of the core from radius $r_0$ to radius $r_1$, with decrease of refractive index can be obtained by gradually changing a concentration of at least two dopants, which can be chosen among the following elements and/or molecules:

- germanium oxide ($GeO_2$);
- fluorine (F);
- phosphorus oxide ($P_XO_Y$);
- boron oxide ($B_XO_Y$);
- aluminum oxide ($Al_2O_3$).

The modification of the refractive index of the other elements of the optical fiber 1 (other parts of the core 10, and the cladding 20) can also be obtained via a change in concentration of dopants in these different elements. More particularly, in an embodiment of the invention, the core 10 and the cladding 20 of the optical fiber 1 are both composed of silica, and the change in refractive index is obtained via the change in dopant concentration.

In a preferred embodiment, the impact of the inner central depressed zone 11 on $V_{11}$ should not induce a $V_{11}$ reduction of more than $1 \times 10^{-3}$ $\mu m^2$, even more preferably $0.5 \times 10^{-3}$ $\mu m^2$. **[Table 2]** below presents examples for an inner central depressed zone 11 presenting a fixed $\Delta n_{0D}$.

**[Table 2]**

| | |
|---|---|
| $r_D = 1\mu m$ | $n_{0D} - n_0 \geq -1 \times 10^{-3}$, and more preferably $n_{0D} - n_0 \geq -0.5 \times 10^{-3}$ |
| $r_D = 0.5\mu m$ | $n_{0D} - n_0 \geq -4 \times 10^{-3}$, and more preferably $n_{0D} - n_0 \geq -2 \times 10^{-3}$ |
| $r_D = 0.25\mu m$ | $n_{0D} - n_0 \geq -16 \times 10^{-3}$, and more preferably $n_{0D} - n_0 \geq -8 \times 10^{-3}$ |

The invention also relates to an **optical fiber transmission system** comprising an optical fiber 1 with the characteristics described previously. Preferentially, such system is a MDWDM system comprising a transmitter and a receiver, respectively comprising a multiplexer and a demultiplexer.

As an example, **[Fig.6]** represents a MDWM system comprising an optical fiber 1, transmitters Tx, receivers Rx, and optical multiplexers (OM) and demultiplexers (OD). The optical multiplexer and demultiplexer allow respectively to multiplex or concentrate several optical signals at one end of the system ($\lambda_1, ... \lambda_N$ and $\lambda_1, ... \lambda_M$) and to demultiplex or separate these signals at the other end of the system, in one direction of in the other. Thus, the signal propagated in the single-mode optical fiber 1 of the invention is a multiplexed signal (a combination of several signals).

Optionally, such system can comprise repeaters (100-1, ..., 100-n) if the system transmits over long distances. The repeaters can comprise one or more filters, and/or one or more amplifiers 101, and/or one or more dispersion compensating fibers 102, etc.

By using the optical fiber of the invention, the range of wavelength which can be used by the optical fiber transmission system is wider than the ones available for the optical communication system of the prior art. In fact, it can operate in the O- and E-wavelength bands (from 1268 to 1375nm) using, for example, Metro Wave Division Multiplexing (MWDM) with a 25Gb/s transceiver.

Furthermore, the Transmitter Dispersion Penalty of such an optical fiber transmission system is lower than 1,5dB, or even lower than 0.5dB.

Theoretical examples of parameters, which can be used for obtaining a single-mode optical fiber 1 according to the invention, are presented in the tables hereinafter. **[Table 3]** to **[Table 14]** present 94 examples of sets of parameters (Ex1 to Ex94).

More particularly, **[Table 3]** lists 30 examples (Ex1 to Ex30), each comprising different parameters of ratios ($r_0/r_1$), radiuses ($r_0, r_1, r_2, r_3$), and refractive-index differences with the third layer of cladding ($\Delta n_0, \Delta n_2, \Delta n_3$).

**[Table 3]**

| N° | Ratio | $r_0$ | $r_1$ | $r_{eq}$ | $r_2$ | $r_3$ | $\Delta n_0$ | $\Delta n_2$ | $\Delta n_3$ |
|---|---|---|---|---|---|---|---|---|---|
| (Units) | | ($\mu m$) | ($\mu m$) | ($\mu m$) | ($\mu m$) | ($\mu m$) | (x1000) | (x1000) | (x1000) |
| Ex1 | 0,05 | 0,185 | 3,7 | 1,9425 | 7,83 | 10,88 | 8,42 | 2,18 | -4,77 |

(continued)

| N° | Ratio | $r_0$ | $r_1$ | $r_{eq}$ | $r_2$ | $r_3$ | $\Delta n_0$ | $\Delta n_2$ | $\Delta n_3$ |
|---|---|---|---|---|---|---|---|---|---|
| (Units) | | (μm) | (μm) | (μm) | (μm) | (μm) | (x1000) | (x1000) | (x1000) |
| Ex2 | 0,2 | 0,730 | 3,65 | 2,19 | 7,83 | 10,88 | 7,58 | 2,18 | -4,77 |
| Ex3 | 0,35 | 1,222 | 3,49 | 2,35575 | 7,83 | 10,88 | 7,04 | 2,2 | -4,77 |
| Ex4 | 0,5 | 1,635 | 3,27 | 2,4525 | 7,83 | 10,88 | 6,73 | 2,23 | -4,77 |
| Ex5 | 0,75 | 2,168 | 2,89 | 2,52875 | 7,83 | 10,88 | 6,49 | 2,25 | -4,77 |
| Ex6 | 0,95 | 2,480 | 2,61 | 2,54475 | 7,83 | 10,88 | 6,43 | 2,26 | -4,77 |
| Ex7 | 0,05 | 0,200 | 3,99 | 2,09475 | 8,27 | 10,88 | 8,18 | 1,94 | -6,27 |
| Ex8 | 0,2 | 0,784 | 3,92 | 2,352 | 8,27 | 10,88 | 7,35 | 1,95 | -6,27 |
| Ex9 | 0,35 | 1,309 | 3,74 | 2,5245 | 8,27 | 10,88 | 6,82 | 1,97 | -6,27 |
| Ex10 | 0,5 | 1,745 | 3,49 | 2,6175 | 8,27 | 10,88 | 6,51 | 2 | -6,27 |
| Ex11 | 0,75 | 2,303 | 3,07 | 2,68625 | 8,27 | 10,88 | 6,28 | 2,03 | -6,27 |
| Ex12 | 0,95 | 2,632 | 2,77 | 2,70075 | 8,27 | 10,88 | 6,23 | 2,03 | -6,27 |
| Ex13 | 0,05 | 0,212 | 4,24 | 2,226 | 8,7 | 10,88 | 8 | 1,72 | -8,39 |
| Ex14 | 0,2 | 0,832 | 4,16 | 2,496 | 8,7 | 10,88 | 7,17 | 1,74 | -8,39 |
| Ex15 | 0,35 | 1,383 | 3,95 | 2,66625 | 8,7 | 10,88 | 6,65 | 1,77 | -8,39 |
| Ex16 | 0,5 | 1,840 | 3,68 | 2,76 | 8,7 | 10,88 | 6,35 | 1,81 | -8,39 |
| Ex17 | 0,75 | 2,423 | 3,23 | 2,82625 | 8,7 | 10,88 | 6,13 | 1,83 | -8,39 |
| Ex18 | 0,95 | 2,765 | 2,91 | 2,83725 | 8,7 | 10,88 | 6,07 | 1,84 | -8,39 |
| Ex19 | 0,05 | 0,188 | 3,76 | 1,974 | 7,83 | 11,96 | 8,28 | 2,04 | -4,35 |
| Ex20 | 0,2 | 0,740 | 3,7 | 2,22 | 7,83 | 11,96 | 7,44 | 2,05 | -4,35 |
| Ex21 | 0,35 | 1,239 | 3,54 | 2,3895 | 7,83 | 11,96 | 6,91 | 2,07 | -4,35 |
| Ex22 | 0,5 | 1,655 | 3,31 | 2,4825 | 7,83 | 11,96 | 6,59 | 2,09 | -4,35 |
| Ex23 | 0,75 | 2,198 | 2,93 | 2,56375 | 7,83 | 11,96 | 6,34 | 2,11 | -4,35 |
| Ex24 | 0,95 | 2,508 | 2,64 | 2,574 | 7,83 | 11,96 | 6,29 | 2,11 | -4,35 |
| Ex25 | 0,05 | 0,201 | 4,01 | 2,10525 | 8,27 | 11,96 | 8,06 | 1,81 | -5,74 |
| Ex26 | 0,2 | 0,788 | 3,94 | 2,364 | 8,27 | 11,96 | 7,23 | 1,82 | -5,74 |
| Ex27 | 0,35 | 1,313 | 3,75 | 2,53125 | 8,27 | 11,96 | 6,7 | 1,85 | -5,74 |
| Ex28 | 0,5 | 1,755 | 3,51 | 2,6325 | 8,27 | 11,96 | 6,4 | 1,87 | -5,74 |
| Ex29 | 0,75 | 2,310 | 3,08 | 2,695 | 8,27 | 11,96 | 6,16 | 1,89 | -5,74 |
| Ex30 | 0,95 | 2,641 | 2,78 | 2,7105 | 8,27 | 11,96 | 6,11 | 1,9 | -5,74 |

[Table 4] refers to the same 30 examples of [Table 3] and represents the subsequent surface integrals and volume integrals of the core and layers of cladding ($V_{01}$, $V_{11}$, $V_{02}$, $V_{12}$, $V_{03}$, $V_{13}$). The profile parameters $K_1$, $K_2$ and $K_3$ are also listed in this table.

[Table 4]

| N° | $V_{01}$ | $V_{11}$ | $K_1$ | $V_{02}$ | $K_2$ | $V_{12}$ | $V_{03}$ | $V_{13}$ | $K_3$ |
|---|---|---|---|---|---|---|---|---|---|
| (Units) | (μm) | (μm²) | (μm²) | (μm) | (μm) | (μm²) | (μm) | (μm²) | (μm) |
| Ex1 | 20,2 | 59,8 | -58,3 | 9,0 | 22,1 | 103,8 | -14,5 | -272,2 | -125,2 |
| Ex2 | 19,8 | 58,8 | -57,0 | 9,1 | 22,0 | 104,6 | -14,5 | -272,2 | -124,4 |
| Ex3 | 19,1 | 55,7 | -55,9 | 9,5 | 21,9 | 108,1 | -14,5 | -272,2 | -124,3 |

(continued)

| N° | $V_{01}$ | $V_{11}$ | $K_1$ | $V_{02}$ | $K_2$ | $V_{12}$ | $V_{03}$ | $V_{13}$ | $K_3$ |
|---|---|---|---|---|---|---|---|---|---|
| (Units) | ($\mu$m) | ($\mu$m$^2$) | ($\mu$m$^2$) | ($\mu$m) | ($\mu$m) | ($\mu$m$^2$) | ($\mu$m) | ($\mu$m$^2$) | ($\mu$m) |
| Ex4 | 18,3 | 51,9 | -55,3 | 10,2 | 22,1 | 112,9 | -14,5 | -272,2 | -125,0 |
| Ex5 | 17,2 | 46,1 | -54,7 | 11,1 | 22,3 | 119,2 | -14,5 | -272,2 | -126,1 |
| Ex6 | 16,5 | 42,4 | -54,2 | 11,8 | 22,5 | 123,2 | -14,5 | -272,2 | -127,2 |
| Ex7 | 20,8 | 65,7 | -56,0 | 8,3 | 21,8 | 101,8 | -16,4 | -313,4 | -125,5 |
| Ex8 | 20,3 | 64,3 | -54,8 | 8,5 | 21,7 | 103,4 | -16,4 | -313,4 | -124,9 |
| Ex9 | 19,6 | 60,9 | -53,9 | 8,9 | 21,7 | 107,2 | -16,4 | -313,4 | -124,7 |
| Ex10 | 18,8 | 56,4 | -53,5 | 9,6 | 21,8 | 112,4 | -16,4 | -313,4 | -125,2 |
| Ex11 | 17,6 | 50,0 | -53,2 | 10,6 | 22,0 | 119,7 | -16,4 | -313,4 | -126,5 |
| Ex12 | 17,0 | 46,2 | -53,0 | 11,2 | 22,2 | 123,3 | -16,4 | -313,4 | -127,3 |
| Ex13 | 21,3 | 70,5 | -53,9 | 7,7 | 21,5 | 99,3 | -18,3 | -358,1 | -125,8 |
| Ex14 | 20,8 | 69,0 | -52,7 | 7,9 | 21,4 | 101,6 | -18,3 | -358,1 | -125,4 |
| Ex15 | 20,0 | 65,0 | -52,0 | 8,4 | 21,4 | 106,4 | -18,3 | -358,1 | -125,3 |
| Ex16 | 19,2 | 60,4 | -51,9 | 9,1 | 21,6 | 112,5 | -18,3 | -358,1 | -126,1 |
| Ex17 | 18,1 | 53,7 | -52,0 | 10,0 | 21,8 | 119,4 | -18,3 | -358,1 | -127,0 |
| Ex18 | 17,4 | 49,6 | -51,9 | 10,7 | 21,9 | 123,7 | -18,3 | -358,1 | -128,0 |
| Ex19 | 20,0 | 59,8 | -57,1 | 8,3 | 21,3 | 96,2 | -18,0 | -355,5 | -124,4 |
| Ex20 | 19,6 | 58,6 | -55,8 | 8,5 | 21,2 | 97,6 | -18,0 | -355,5 | -123,8 |
| Ex21 | 18,9 | 55,7 | -54,8 | 8,9 | 21,2 | 101,0 | -18,0 | -355,5 | -123,8 |
| Ex22 | 18,1 | 51,7 | -54,2 | 9,4 | 21,2 | 105,2 | -18,0 | -355,5 | -124,0 |
| Ex23 | 17,0 | 46,1 | -53,5 | 10,3 | 21,4 | 111,2 | -18,0 | -355,5 | -125,0 |
| Ex24 | 16,3 | 42,4 | -53,1 | 11,0 | 21,6 | 114,7 | -18,0 | -355,5 | -125,8 |
| Ex25 | 20,4 | 64,4 | -55,1 | 7,7 | 21,0 | 94,7 | -21,2 | -428,5 | -126,1 |
| Ex26 | 20,0 | 63,0 | -53,8 | 7,9 | 20,9 | 96,2 | -21,2 | -428,5 | -125,5 |
| Ex27 | 19,2 | 59,5 | -52,9 | 8,4 | 20,9 | 100,5 | -21,2 | -428,5 | -125,4 |
| Ex28 | 18,5 | 55,6 | -52,6 | 8,9 | 20,9 | 104,9 | -21,2 | -428,5 | -125,8 |
| Ex29 | 17,3 | 49,2 | -52,2 | 9,8 | 21,1 | 111,3 | -21,2 | -428,5 | -126,5 |
| Ex30 | 16,7 | 45,6 | -52,0 | 10,4 | 21,3 | 115,3 | -21,2 | -428,5 | -127,6 |

[Table 5] refers to the same 30 examples of [Table 3] and represents the corresponding Zero Dispersion Wavelength (ZDW), Zero Dispersion Shift (ZDS), Chromatic Dispersion (CD) at 1267.5nm, at 1310nm, and at 1374.5nm, the Mode Filed Diameter (MFD) at 1310nm and at 1550nm, and the cable cutoff wavelength.

[Table 5]

| N° | ZDW | ZDS | CD 1267.5 | CD 1310 | CD 1374.5 | MFD 1310 | MFD 1550 | Cable Cutoff |
|---|---|---|---|---|---|---|---|---|
| (Units) | (nm) | (ps/(nm$^2$.km)) | (ps/(nm.km)) | (ps/(nm.km)) | (ps/(nm.km)) | ($\mu$m) | ($\mu$m) | (nm) |
| Ex1 | 1350 | 0,097 | -8,9 | -4,1 | 2,4 | 9,00 | 10,33 | 1212 |
| Ex2 | 1350 | 0,096 | -8,9 | -4,1 | 2,4 | 9,00 | 10,33 | 1211 |
| Ex3 | 1350 | 0,096 | -8,8 | -4,1 | 2,3 | 9,00 | 10,33 | 1211 |
| Ex4 | 1350 | 0,096 | -8,8 | -4,1 | 2,4 | 9,00 | 10,34 | 1212 |

(continued)

| N° | ZDW | ZDS | CD 1267.5 | CD 1310 | CD 1374.5 | MFD 1310 | MFD 1550 | Cable Cutoff |
|---|---|---|---|---|---|---|---|---|
| (Units) | (nm) | (ps/(nm²·km)) | (ps/(nm·km)) | (ps/(nm·km)) | (ps/(nm·km)) | (μm) | (μm) | (nm) |
| Ex5 | 1350 | 0,096 | -8,8 | -4,1 | 2,3 | 9,00 | 10,33 | 1214 |
| Ex6 | 1350 | 0,096 | -8,7 | -4,1 | 2,4 | 9,00 | 10,34 | 1214 |
| Ex7 | 1350 | 0,096 | -8,8 | -4,1 | 2,4 | 9,00 | 10,34 | 1209 |
| Ex8 | 1350 | 0,096 | -8,8 | -4,1 | 2,3 | 9,00 | 10,34 | 1209 |
| Ex9 | 1350 | 0,096 | -8,8 | -4,1 | 2,3 | 9,00 | 10,34 | 1209 |
| Ex10 | 1350 | 0,095 | -8,7 | -4,1 | 2,3 | 9,00 | 10,35 | 1210 |
| Ex11 | 1350 | 0,095 | -8,7 | -4 | 2,3 | 9,01 | 10,35 | 1210 |
| Ex12 | 1350 | 0,095 | -8,7 | -4,1 | 2,3 | 9,00 | 10,35 | 1210 |
| Ex13 | 1350 | 0,095 | -8,7 | -4,1 | 2,3 | 9,00 | 10,34 | 1209 |
| Ex14 | 1350 | 0,095 | -8,7 | -4,1 | 2,3 | 9,00 | 10,34 | 1209 |
| Ex15 | 1350 | 0,095 | -8,7 | -4 | 2,3 | 9,00 | 10,34 | 1209 |
| Ex16 | 1350 | 0,095 | -8,6 | -4 | 2,3 | 9,01 | 10,35 | 1209 |
| Ex17 | 1350 | 0,094 | -8,6 | -4 | 2,3 | 8,99 | 10,34 | 1209 |
| Ex18 | 1350 | 0,094 | -8,6 | -4 | 2,3 | 9,00 | 10,35 | 1209 |
| Ex19 | 1350 | 0,097 | -8,9 | -4,1 | 2,4 | 9,00 | 10,33 | 1210 |
| Ex20 | 1350 | 0,097 | -8,8 | -4,1 | 2,4 | 9,00 | 10,34 | 1210 |
| Ex21 | 1350 | 0,096 | -8,8 | -4,1 | 2,3 | 8,99 | 10,33 | 1210 |
| Ex22 | 1350 | 0,096 | -8,8 | -4,1 | 2,4 | 9,00 | 10,34 | 1210 |
| Ex23 | 1350 | 0,096 | -8,7 | -4 | 2,4 | 9,00 | 10,34 | 1208 |
| Ex24 | 1350 | 0,096 | -8,8 | -4,1 | 2,3 | 9,00 | 10,34 | 1209 |
| Ex25 | 1350 | 0,097 | -8,8 | -4,1 | 2,4 | 9,00 | 10,34 | 1213 |
| Ex26 | 1350 | 0,096 | -8,8 | -4,1 | 2,4 | 9,00 | 10,34 | 1212 |
| Ex27 | 1350 | 0,096 | -8,8 | -4,1 | 2,4 | 9,01 | 10,34 | 1213 |
| Ex28 | 1350 | 0,096 | -8,7 | -4,1 | 2,3 | 9,00 | 10,33 | 1213 |
| Ex29 | 1350 | 0,096 | -8,7 | -4,1 | 2,3 | 9,00 | 10,34 | 1212 |
| Ex30 | 1350 | 0,095 | -8,7 | -4,1 | 2,3 | 9,00 | 10,34 | 1212 |

[Table 6] refers to the same 30 examples of [Table 3] and represents the corresponding bend losses (R7.5BL, R10BL and R15BL) for either 1 or 10 turns, measured at different wavelengths (1550μm and 1625μm), and for different radiuses (7,5mm, 10mm, and 15mm).

[Table 6]

| N° | R15BL at 1550 | R10BL at 1550 | R7.5BL at 1550 | R15BL at 1625 | R10BL at 1625 | R7.5BL at 1625 | BL Type |
|---|---|---|---|---|---|---|---|
| (Units) | (dB/10turn) | (dB/turn) | (dB/turn) | (dB/10turn) | (dB/turn) | (dB/turn) | |
| Ex1 | 0.034 | 0.16 | 0.92 | 0.184 | 0.47 | 1.94 | A1 |
| Ex2 | 0.035 | 0.16 | 0.93 | 0.189 | 0.48 | 1.96 | A1 |
| Ex3 | 0.035 | 0.17 | 0.94 | 0.191 | 0.48 | 1.97 | A1 |
| Ex4 | 0.036 | 0.17 | 0.95 | 0.194 | 0.49 | 1.99 | A1 |

(continued)

| N° | R15BL at 1550 | R10BL at 1550 | R7.5BL at 1550 | R15BL at 1625 | R10BL at 1625 | R7.5BL at 1625 | BL Type |
|---|---|---|---|---|---|---|---|
| (Units) | (dB/10turn) | (dB/turn) | (dB/turn) | (dB/10turn) | (dB/turn) | (dB/turn) | |
| Ex5 | 0.035 | 0.17 | 0.95 | 0.192 | 0.48 | 1.99 | A1 |
| Ex6 | 0.036 | 0.17 | 0.95 | 0.193 | 0.49 | 2 | A1 |
| Ex7 | 0.035 | 0.16 | 0.84 | 0.189 | 0.45 | 1.75 | A1 |
| Ex8 | 0.036 | 0.16 | 0.85 | 0.191 | 0.45 | 1.76 | A1 |
| Ex9 | 0.037 | 0.16 | 0.86 | 0.196 | 0.46 | 1.79 | A1 |
| Ex10 | 0.037 | 0.16 | 0.87 | 0.198 | 0.46 | 1.81 | A1 |
| Ex11 | 0.039 | 0.17 | 0.9 | 0.207 | 0.48 | 1.85 | A1 |
| Ex12 | 0.04 | 0.17 | 0.9 | 0.21 | 0.48 | 1.86 | A1 |
| Ex13 | 0.035 | 0.14 | 0.75 | 0.184 | 0.41 | 1.56 | A1 |
| Ex14 | 0.036 | 0.15 | 0.76 | 0.188 | 0.42 | 1.57 | A1 |
| Ex15 | 0.037 | 0.15 | 0.78 | 0.192 | 0.42 | 1.6 | A1 |
| Ex16 | 0.038 | 0.15 | 0.8 | 0.199 | 0.43 | 1.63 | A1 |
| Ex17 | 0.041 | 0.16 | 0.83 | 0.213 | 0.45 | 1.69 | A1 |
| Ex18 | 0.042 | 0.16 | 0.84 | 0.217 | 0.46 | 1.71 | A1 |
| Ex19 | 0.043 | 0.15 | 0.7 | 0.218 | 0.41 | 1.42 | A1 |
| Ex20 | 0.042 | 0.15 | 0.7 | 0.217 | 0.41 | 1.42 | A1 |
| Ex21 | 0.043 | 0.15 | 0.7 | 0.219 | 0.41 | 1.43 | A1 |
| Ex22 | 0.045 | 0.15 | 0.72 | 0.228 | 0.42 | 1.46 | A1 |
| Ex23 | 0.048 | 0.16 | 0.75 | 0.244 | 0.44 | 1.52 | A1 |
| Ex24 | 0.048 | 0.16 | 0.75 | 0.245 | 0.44 | 1.51 | A1 |
| Ex25 | 0.043 | 0.13 | 0.57 | 0.213 | 0.35 | 1.15 | A1 |
| Ex26 | 0.043 | 0.13 | 0.58 | 0.217 | 0.36 | 1.16 | A1 |
| Ex27 | 0.043 | 0.13 | 0.58 | 0.217 | 0.36 | 1.17 | A1 |
| Ex28 | 0.045 | 0.13 | 0.59 | 0.223 | 0.37 | 1.19 | A1 |
| Ex29 | 0.049 | 0.14 | 0.62 | 0.241 | 0.38 | 1.24 | A1 |
| Ex30 | 0.05 | 0.14 | 0.63 | 0.247 | 0.39 | 1.25 | A1 |

**[Table 7]**, **[Table 8]** and **[Table 9]** represent 30 more examples (Ex31 to Ex60), listing the same parameters as respectively **[Table 3], [Table 4], [Table 5]** and **[Table 6].**

**[Table 7]**

| N° | Ratio | $r_0$ | $r_1$ | $r_{eq}$ | $r_2$ | $r_3$ | $\Delta n_0$ | $\Delta n_2$ | $\Delta n_3$ |
|---|---|---|---|---|---|---|---|---|---|
| (Units) | | ($\mu$m) | ($\mu$m) | ($\mu$m) | ($\mu$m) | ($\mu$m) | (x1000) | (x1000) | (x1000) |
| Ex31 | 0,05 | 0,212 | 4,24 | 2,226 | 8,7 | 11,96 | 7,89 | 1,59 | -7,58 |
| Ex32 | 0,2 | 0,832 | 4,16 | 2,496 | 8,7 | 11,96 | 7,05 | 1,6 | -7,58 |
| Ex33 | 0,35 | 1,383 | 3,95 | 2,66625 | 8,7 | 11,96 | 6,54 | 1,65 | -7,58 |
| Ex34 | 0,5 | 1,840 | 3,68 | 2,76 | 8,7 | 11,96 | 6,24 | 1,68 | -7,58 |
| Ex35 | 0,75 | 2,423 | 3,23 | 2,82625 | 8,7 | 11,96 | 6 | 1,7 | -7,58 |
| Ex36 | 0,95 | 2,765 | 2,91 | 2,83725 | 8,7 | 11,96 | 5,95 | 1,7 | -7,58 |

(continued)

| N° | Ratio | r₀ | r₁ | r_eq | r₂ | r₃ | Δn₀ | Δn₂ | Δn₃ |
|---|---|---|---|---|---|---|---|---|---|
| (Units) | | (µm) | (µm) | (µm) | (µm) | (µm) | (x1000) | (x1000) | (x1000) |
| Ex37 | 0,05 | 0,194 | 3,87 | 2,03175 | 7,83 | 13,05 | 8,11 | 1,9 | -3,95 |
| Ex38 | 0,2 | 0,762 | 3,81 | 2,286 | 7,83 | 13,05 | 7,27 | 1,9 | -3,95 |
| Ex39 | 0,35 | 1,274 | 3,64 | 2,457 | 7,83 | 13,05 | 6,76 | 1,94 | -3,95 |
| Ex40 | 0,5 | 1,700 | 3,4 | 2,55 | 7,83 | 13,05 | 6,45 | 1,97 | -3,95 |
| Ex41 | 0,75 | 2,250 | 3 | 2,625 | 7,83 | 13,05 | 6,21 | 1,98 | -3,95 |
| Ex42 | 0,95 | 2,575 | 2,71 | 2,64225 | 7,83 | 13,05 | 6,15 | 1,99 | -3,95 |
| Ex43 | 0,05 | 0,204 | 4,08 | 2,142 | 8,27 | 13,05 | 7,95 | 1,7 | -5,25 |
| Ex44 | 0,2 | 0,804 | 4,02 | 2,412 | 8,27 | 13,05 | 7,12 | 1,71 | -5,25 |
| Ex45 | 0,35 | 1,337 | 3,82 | 2,5785 | 8,27 | 13,05 | 6,6 | 1,74 | -5,25 |
| Ex46 | 0,5 | 1,780 | 3,56 | 2,67 | 8,27 | 13,05 | 6,29 | 1,77 | -5,25 |
| Ex47 | 0,75 | 2,348 | 3,13 | 2,73875 | 8,27 | 13,05 | 6,06 | 1,79 | -5,25 |
| Ex48 | 0,95 | 2,689 | 2,83 | 2,75925 | 8,27 | 13,05 | 6 | 1,79 | -5,25 |
| Ex49 | 0,05 | 0,215 | 4,3 | 2,2575 | 8,7 | 13,05 | 7,78 | 1,48 | -6,9 |
| Ex50 | 0,2 | 0,844 | 4,22 | 2,532 | 8,7 | 13,05 | 6,95 | 1,5 | -6,9 |
| Ex51 | 0,35 | 1,400 | 4 | 2,7 | 8,7 | 13,05 | 6,44 | 1,54 | -6,9 |
| Ex52 | 0,5 | 1,860 | 3,72 | 2,79 | 8,7 | 13,05 | 6,14 | 1,57 | -6,9 |
| Ex53 | 0,75 | 2,445 | 3,26 | 2,8525 | 8,7 | 13,05 | 5,91 | 1,6 | -6,9 |
| Ex54 | 0,95 | 2,793 | 2,94 | 2,8665 | 8,7 | 13,05 | 5,86 | 1,61 | -6,9 |
| Ex55 | 0,45 | 1,481 | 3,29 | 2,38525 | 8,27 | 13,05 | 6,54 | 1,95 | -5,25 |
| Ex56 | 0,25 | 0,908 | 3,63 | 2,26875 | 8,27 | 13,05 | 7,18 | 1,86 | -5,25 |
| Ex57 | 0,4 | 1,352 | 3,38 | 2,366 | 7,83 | 13,05 | 6,54 | 1,93 | -3,95 |
| Ex58 | 0,7 | 2,072 | 2,96 | 2,516 | 7,83 | 11,96 | 6,55 | 2,28 | -4,35 |
| Ex59 | 0,15 | 0,593 | 3,95 | 2,27125 | 8,27 | 10,88 | 7,73 | 2,05 | -6,27 |
| Ex60 | 0,1 | 0,390 | 3,9 | 2,145 | 7,83 | 10,88 | 7,92 | 2,19 | -4,77 |

[Table 8]

| N° | V₀₁ | V₁₁ | K₁ | V₀₂ | K₂ | V₁₂ | V₀₃ | V₁₃ | K₃ |
|---|---|---|---|---|---|---|---|---|---|
| (Units) | (µm) | (µm²) | (µm²) | (µm) | (µm) | (µm²) | (µm) | (µm²) | (µm) |
| Ex31 | 20,8 | 68,3 | -53,2 | 7,1 | 20,6 | 91,8 | -24,7 | -510,5 | -127,7 |
| Ex32 | 20,3 | 66,7 | -51,8 | 7,3 | 20,4 | 93,4 | -24,7 | -510,5 | -126,9 |
| Ex33 | 19,6 | 63,2 | -51,2 | 7,8 | 20,5 | 99,1 | -24,7 | -510,5 | -127,5 |
| Ex34 | 18,8 | 58,8 | -51,0 | 8,4 | 20,6 | 104,4 | -24,7 | -510,5 | -127,9 |
| Ex35 | 17,6 | 52,3 | -50,9 | 9,3 | 20,8 | 110,9 | -24,7 | -510,5 | -128,5 |
| Ex36 | 17,0 | 48,6 | -50,9 | 9,8 | 20,9 | 114,3 | -24,7 | -510,5 | -129,2 |
| Ex37 | 20,0 | 61,1 | -55,7 | 7,5 | 20,5 | 88,0 | -20,6 | -430,5 | -123,1 |
| Ex38 | 19,5 | 59,8 | -54,4 | 7,6 | 20,3 | 88,9 | -20,6 | -430,5 | -122,2 |
| Ex39 | 18,9 | 57,1 | -53,5 | 8,1 | 20,4 | 93,2 | -20,6 | -430,5 | -122,7 |
| Ex40 | 18,1 | 53,0 | -53,0 | 8,7 | 20,5 | 98,0 | -20,6 | -430,5 | -123,2 |

(continued)

| N° | $V_{01}$ | $V_{11}$ | $K_1$ | $V_{02}$ | $K_2$ | $V_{12}$ | $V_{03}$ | $V_{13}$ | $K_3$ |
|---|---|---|---|---|---|---|---|---|---|
| (Units) | ($\mu$m) | ($\mu$m$^2$) | ($\mu$m$^2$) | ($\mu$m) | ($\mu$m) | ($\mu$m$^2$) | ($\mu$m) | ($\mu$m$^2$) | ($\mu$m) |
| Ex41 | 17,0 | 47,2 | -52,5 | 9,6 | 20,6 | 103,6 | -20,6 | -430,5 | -123,8 |
| Ex42 | 16,4 | 43,7 | -52,2 | 10,2 | 20,8 | 107,4 | -20,6 | -430,5 | -124,8 |
| Ex43 | 20,3 | 64,8 | -54,1 | 7,1 | 20,3 | 88,0 | -25,1 | -535,0 | -126,8 |
| Ex44 | 19,9 | 63,8 | -52,8 | 7,3 | 20,2 | 89,3 | -25,1 | -535,0 | -126,2 |
| Ex45 | 19,2 | 60,2 | -52,0 | 7,7 | 20,2 | 93,6 | -25,1 | -535,0 | -126,1 |
| Ex46 | 18,4 | 55,8 | -51,6 | 8,3 | 20,3 | 98,6 | -25,1 | -535,0 | -126,5 |
| Ex47 | 17,3 | 49,8 | -51,4 | 9,2 | 20,4 | 104,9 | -25,1 | -535,0 | -127,3 |
| Ex48 | 16,7 | 46,4 | -51,2 | 9,7 | 20,6 | 108,1 | -25,1 | -535,0 | -128,0 |
| Ex49 | 20,6 | 68,2 | -52,2 | 6,5 | 19,9 | 84,7 | -30,0 | -652,8 | -129,5 |
| Ex50 | 20,1 | 66,8 | -50,9 | 6,7 | 19,8 | 86,8 | -30,0 | -652,8 | -129,0 |
| Ex51 | 19,4 | 63,1 | -50,3 | 7,2 | 19,8 | 91,9 | -30,0 | -652,8 | -129,2 |
| Ex52 | 18,6 | 58,6 | -50,1 | 7,8 | 19,9 | 97,1 | -30,0 | -652,8 | -129,5 |
| Ex53 | 17,5 | 52,3 | -50,1 | 8,7 | 20,1 | 104,1 | -30,0 | -652,8 | -130,4 |
| Ex54 | 16,9 | 48,8 | -50,1 | 9,3 | 20,3 | 107,9 | -30,0 | -652,8 | -131,4 |
| Ex55 | 17,4 | 48,5 | -53,1 | 9,7 | 21,0 | 112,3 | -25,1 | -535,0 | -130,1 |
| Ex56 | 18,8 | 55,2 | -54,9 | 8,6 | 20,9 | 102,7 | -25,1 | -535,0 | -129,4 |
| Ex57 | 17,4 | 49,4 | -52,5 | 8,6 | 19,9 | 96,3 | -20,6 | -430,5 | -120,2 |
| Ex58 | 17,5 | 47,3 | -55,0 | 11,1 | 22,5 | 119,8 | -18,0 | -355,5 | -130,3 |
| Ex59 | 21,0 | 66,6 | -56,2 | 8,9 | 22,5 | 108,2 | -16,4 | -313,4 | -128,9 |
| Ex60 | 20,8 | 65,6 | -56,3 | 8,6 | 22,1 | 101,0 | -14,5 | -272,2 | -125,3 |

[Table 9]

| N° | ZDW | ZDS | CD 1267.5 | CD 1310 | CD 1374.5 | MFD 1310 | MFD 1550 | Cable Cutoff |
|---|---|---|---|---|---|---|---|---|
| (Units) | (nm) | (ps/(nm$^2$.km)) | (ps/(nm.km)) | (ps/(nm.km)) | (ps/(nm.km)) | ($\mu$m) | ($\mu$m) | (nm) |
| Ex31 | 1350 | 0,096 | -8,8 | -4,1 | 2,3 | 8,99 | 10,33 | 1216 |
| Ex32 | 1350 | 0,096 | -8,7 | -4,1 | 2,3 | 9,00 | 10,33 | 1215 |
| Ex33 | 1350 | 0,096 | -8,7 | -4 | 2,3 | 9,00 | 10,34 | 1219 |
| Ex34 | 1350 | 0,095 | -8,6 | -4 | 2,3 | 9,00 | 10,34 | 1218 |
| Ex35 | 1350 | 0,095 | -8,6 | -4 | 2,3 | 9,00 | 10,35 | 1215 |
| Ex36 | 1350 | 0,095 | -8,6 | -4 | 2,3 | 9,00 | 10,34 | 1215 |
| Ex37 | 1350 | 0,096 | -8,8 | -4,1 | 2,4 | 9,00 | 10,34 | 1214 |
| Ex38 | 1350 | 0,096 | -8,8 | -4,1 | 2,4 | 9,00 | 10,34 | 1213 |
| Ex39 | 1350 | 0,096 | -8,8 | -4,1 | 2,3 | 9,00 | 10,34 | 1218 |
| Ex40 | 1350 | 0,096 | -8,7 | -4 | 2,4 | 9,00 | 10,35 | 1219 |
| Ex41 | 1350 | 0,095 | -8,7 | -4 | 2,3 | 9,00 | 10,34 | 1217 |
| Ex42 | 1350 | 0,095 | -8,7 | -4 | 2,4 | 9,00 | 10,35 | 1216 |
| Ex43 | 1350 | 0,096 | -8,8 | -4,1 | 2,3 | 9,00 | 10,34 | 1214 |
| Ex44 | 1350 | 0,096 | -8,8 | -4,1 | 2,3 | 9,00 | 10,34 | 1215 |

(continued)

| N° | ZDW | ZDS | CD 1267.5 | CD 1310 | CD 1374.5 | MFD 1310 | MFD 1550 | Cable Cutoff |
|---|---|---|---|---|---|---|---|---|
| (Units) | (nm) | (ps/(nm².km)) | (ps/(nm.km)) | (ps/(nm.km)) | (ps/(nm.km)) | (μm) | (μm) | (nm) |
| Ex45 | 1350 | 0,096 | -8,7 | -4,1 | 2,3 | 9,00 | 10,34 | 1218 |
| Ex46 | 1350 | 0,095 | -8,7 | -4 | 2,3 | 9,01 | 10,35 | 1213 |
| Ex47 | 1350 | 0,095 | -8,7 | -4 | 2,3 | 9,00 | 10,35 | 1214 |
| Ex48 | 1350 | 0,095 | -8,6 | -4 | 2,3 | 9,00 | 10,34 | 1214 |
| Ex49 | 1350 | 0,096 | -8,7 | -4,1 | 2,3 | 9,00 | 10,34 | 1205 |
| Ex50 | 1350 | 0,096 | -8,7 | -4 | 2,3 | 9,00 | 10,34 | 1205 |
| Ex51 | 1350 | 0,095 | -8,7 | -4 | 2,3 | 9,00 | 10,34 | 1207 |
| Ex52 | 1350 | 0,095 | -8,6 | -4 | 2,3 | 9,00 | 10,34 | 1206 |
| Ex53 | 1350 | 0,095 | -8,6 | -4 | 2,3 | 9,00 | 10,35 | 1206 |
| Ex54 | 1350 | 0,095 | -8,6 | -4 | 2,3 | 9,00 | 10,35 | 1206 |
| Ex55 | 1352 | 0,098 | -9,3 | -4,4 | 2,2 | 9,18 | 10,58 | 1221 |
| Ex56 | 1356 | 0,097 | -9,5 | -4,7 | 1,8 | 9,03 | 10,43 | 1215 |
| Ex57 | 1350 | 0,097 | -8,8 | -4,1 | 2,4 | 9,15 | 10,52 | 1186 |
| Ex58 | 1350 | 0,096 | -8,8 | -4,1 | 2,4 | 9,01 | 10,35 | 1245 |
| Ex59 | 1351 | 0,096 | -8,9 | -4,2 | 2,3 | 8,98 | 10,31 | 1237 |
| Ex60 | 1345 | 0,096 | -8,3 | -3,6 | 2,8 | 9,04 | 10,33 | 1229 |

[Table 10]

| N° | R15BL at 1550 | R10BL at 1550 | R7.5BL at 1550 | R15BL at 1625 | R10BL at 1625 | R7.5BL at 1625 | BL Type |
|---|---|---|---|---|---|---|---|
| (Units) | (dB/10turn) | (dB/turn) | (dB/turn) | (dB/10turn) | (dB/turn) | (dB/turn) | |
| Ex31 | 0.04 | 0.11 | 0.46 | 0.197 | 0.29 | 0.91 | A1 |
| Ex32 | 0.041 | 0.11 | 0.46 | 0.203 | 0.3 | 0.93 | A1 |
| Ex33 | 0.039 | 0.11 | 0.46 | 0.194 | 0.29 | 0.92 | A1 |
| Ex34 | 0.043 | 0.11 | 0.48 | 0.21 | 0.31 | 0.95 | A1 |
| Ex35 | 0.048 | 0.12 | 0.5 | 0.232 | 0.33 | 1 | A1 |
| Ex36 | 0.049 | 0.12 | 0.51 | 0.236 | 0.33 | 1.01 | A1 |
| Ex37 | 0.046 | 0.12 | 0.51 | 0.224 | 0.33 | 1.02 | A1 |
| Ex38 | 0.047 | 0.12 | 0.51 | 0.229 | 0.33 | 1.03 | A1 |
| Ex39 | 0.043 | 0.12 | 0.5 | 0.213 | 0.32 | 1.01 | A1 |
| Ex40 | 0.044 | 0.12 | 0.51 | 0.219 | 0.33 | 1.02 | A1 |
| Ex41 | 0.048 | 0.13 | 0.52 | 0.236 | 0.34 | 1.05 | A1 |
| Ex42 | 0.049 | 0.13 | 0.53 | 0.241 | 0.35 | 1.07 | A1 |
| Ex43 | 0.036 | 0.09 | 0.34 | 0.177 | 0.24 | 0.69 | A1 |
| Ex44 | 0.036 | 0.09 | 0.34 | 0.177 | 0.24 | 0.69 | A1 |
| Ex45 | 0.037 | 0.09 | 0.35 | 0.18 | 0.24 | 0.7 | A1 |
| Ex46 | 0.04 | 0.09 | 0.36 | 0.192 | 0.25 | 0.72 | A1 |
| Ex47 | 0.042 | 0.1 | 0.37 | 0.202 | 0.26 | 0.74 | A1 |

(continued)

| N° | R15BL at 1550 | R10BL at 1550 | R7.5BL at 1550 | R15BL at 1625 | R10BL at 1625 | R7.5BL at 1625 | BL Type |
|---|---|---|---|---|---|---|---|
| (Units) | (dB/10turn) | (dB/turn) | (dB/turn) | (dB/10turn) | (dB/turn) | (dB/turn) | |
| Ex48 | 0.043 | 0.1 | 0.37 | 0.206 | 0.26 | 0.74 | A1 |
| Ex49 | 0.031 | 0.07 | 0.24 | 0.151 | 0.18 | 0.48 | A1 |
| Ex50 | 0.031 | 0.07 | 0.24 | 0.151 | 0.18 | 0.48 | A1 |
| Ex51 | 0.032 | 0.07 | 0.24 | 0.152 | 0.18 | 0.49 | A1 |
| Ex52 | 0.034 | 0.07 | 0.25 | 0.163 | 0.19 | 0.51 | A1 |
| Ex53 | 0.037 | 0.07 | 0.26 | 0.173 | 0.19 | 0.52 | A1 |
| Ex54 | 0.037 | 0.07 | 0.26 | 0.176 | 0.19 | 0.52 | A1 |
| Ex55 | 0.071 | 0.13 | 0.48 | 0.310 | 0.34 | 0.92 | A1 |
| Ex56 | 0.052 | 0.11 | 0.42 | 0.241 | 0.29 | 0.82 | A1 |
| Ex57 | 0.150 | 0.24 | 0.83 | 0.636 | 0.59 | 1.57 | A1 |
| Ex58 | 0.018 | 0.09 | 0.51 | 0.101 | 0.27 | 1.09 | A1 |
| Ex59 | 0.015 | 0.09 | 0.60 | 0.089 | 0.28 | 1.31 | A1 |
| Ex60 | 0.018 | 0.11 | 0.71 | 0.106 | 0.33 | 1.55 | A1 |

Finally, **[Table 11], [Table 12], [Table 13]** and **[Table 14]** represent 34 more examples (Ex61 to Ex94), listing the same parameters as respectively **[Table 3], [Table 4], [Table 5]** and **[Table 6].**

**[Table 11]**

| N° | Ratio | $r_0$ | $r_1$ | $r_{eq}$ | $r_2$ | $r_3$ | $\Delta n_0$ | $\Delta n_2$ | $\Delta n_3$ |
|---|---|---|---|---|---|---|---|---|---|
| (Units) | | (μm) | (μm) | (μm) | (μm) | (μm) | (x1000) | (x1000) | (x1000) |
| Ex61 | 0,5 | 1,610 | 3,22 | 2,415 | 7,83 | 10,88 | 7,04 | 2,38 | -4,77 |
| Ex62 | 0,3 | 1,062 | 3,54 | 2,301 | 8,27 | 11,96 | 7,04 | 2,09 | -5,74 |
| Ex63 | 0,6 | 1,938 | 3,23 | 2,584 | 7,83 | 10,88 | 6,47 | 1,99 | -4,77 |
| Ex64 | 0,3 | 1,236 | 4,12 | 2,678 | 8,27 | 10,88 | 6,9 | 1,76 | -6,27 |
| Ex65 | 0,25 | 0,785 | 3,14 | 1,9625 | 7,83 | 10,88 | 7,66 | 2,33 | -4,77 |
| Ex66 | 0,1 | 0,407 | 4,07 | 2,2385 | 7,83 | 10,88 | 7,72 | 2,05 | -4,77 |
| Ex67 | 0,25 | 0,928 | 3,71 | 2,31875 | 7,83 | 10,88 | 7,25 | 2,39 | -4,77 |
| Ex68 | 0,95 | 2,584 | 2,72 | 2,652 | 7,83 | 10,88 | 6,18 | 2,28 | -4,77 |
| Ex69 | 0,7 | 2,289 | 3,27 | 2,7795 | 8,7 | 10,88 | 6,27 | 1,98 | -8,39 |
| Ex70 | 0,7 | 2,156 | 3,08 | 2,618 | 7,83 | 13,05 | 6,58 | 2,16 | -3,95 |
| Ex71 | 0,1 | 0,506 | 5,06 | 2,783 | 8,27 | 13,05 | 7,74 | 1,18 | -5,25 |
| Ex72 | 0,2 | 0,828 | 4,14 | 2,484 | 7,83 | 11,96 | 7,43 | 1,94 | -4,35 |
| Ex73 | 0,3 | 1,332 | 4,44 | 2,886 | 8,27 | 13,05 | 6,39 | 1,43 | -5,25 |
| Ex74 | 0,1 | 0,441 | 4,41 | 2,4255 | 8,7 | 13,05 | 7,39 | 1,6 | -6,9 |
| Ex75 | 0,4 | 1,652 | 4,13 | 2,891 | 8,7 | 13,05 | 6,48 | 1,21 | -6,9 |
| Ex76 | 0,5 | 1,720 | 3,44 | 2,58 | 7,83 | 13,05 | 6,39 | 2,17 | -3,95 |
| Ex77 | 0,1 | 0,480 | 4,8 | 2,64 | 8,27 | 10,88 | 7,86 | 1,66 | -6,27 |
| Ex78 | 0,6 | 2,292 | 3,82 | 3,056 | 7,83 | 11,96 | 6,54 | 1,87 | -4,35 |
| Ex79 | 0,9 | 2,763 | 3,07 | 2,9165 | 8,27 | 10,88 | 6,21 | 2,13 | -6,27 |

(continued)

| N° | Ratio | $r_0$ | $r_1$ | $r_{eq}$ | $r_2$ | $r_3$ | $\Delta n_0$ | $\Delta n_2$ | $\Delta n_3$ |
|---|---|---|---|---|---|---|---|---|---|
| (Units) | | (μm) | (μm) | (μm) | (μm) | (μm) | (x1000) | (x1000) | (x1000) |
| Ex80 | 0,4 | 1,612 | 4,03 | 2,821 | 8,27 | 11,96 | 6,44 | 1,82 | -5,74 |
| Ex81 | 0,45 | 1,899 | 4,22 | 3,0595 | 8,27 | 13,05 | 6,17 | 1,4 | -5,25 |
| Ex82 | 0,4 | 1,664 | 4,16 | 2,912 | 8,27 | 13,05 | 6,55 | 1,34 | -5,25 |
| Ex83 | 0,3 | 1,305 | 4,35 | 2,8275 | 8,7 | 11,96 | 6,54 | 1,65 | -7,58 |
| Ex84 | 0,6 | 2,394 | 3,99 | 3,192 | 8,7 | 11,96 | 6,15 | 1,44 | -7,58 |
| Ex85 | 0,7 | 2,345 | 3,35 | 2,8475 | 8,7 | 11,96 | 6,42 | 1,6 | -7,58 |
| Ex86 | 0,1 | 0,434 | 4,34 | 2,387 | 7,83 | 13,05 | 8,16 | 1,76 | -3,95 |
| Ex87 | 0,85 | 2,992 | 3,52 | 3,256 | 8,7 | 13,05 | 5,99 | 1,23 | -6,9 |
| Ex88 | 0,1 | 0,448 | 4,48 | 2,464 | 8,7 | 10,88 | 7,93 | 1,74 | -8,39 |
| Ex89 | 0,25 | 1,150 | 4,6 | 2,875 | 8,27 | 10,88 | 7,11 | 1,74 | -6,27 |
| Ex90 | 0,2 | 0,894 | 4,47 | 2,682 | 7,83 | 11,96 | 7,15 | 1,74 | -4,35 |
| Ex91 | 0,45 | 1,733 | 3,85 | 2,79125 | 8,7 | 11,96 | 6,75 | 1,57 | -7,58 |
| Ex92 | 0,9 | 2,790 | 3,1 | 2,945 | 8,27 | 13,05 | 6,09 | 1,69 | -5,25 |
| Ex93 | 0,75 | 2,790 | 3,72 | 3,255 | 8,7 | 11,96 | 6,26 | 1,44 | -7,58 |
| Ex94 | 0,25 | 1,070 | 4,28 | 2,675 | 7,83 | 10,88 | 7,53 | 2,04 | -4',77 |

**[Table 12]**

| N° | $V_{01}$ | $V_{11}$ | $K_1$ | $V_{02}$ | $K_2$ | $V_{12}$ | $V_{03}$ | $V_{13}$ | $K_3$ |
|---|---|---|---|---|---|---|---|---|---|
| (Units) | (μm) | (μm$^2$) | (μm$^2$) | (μm) | (μm) | (μm$^2$) | (μm) | (μm$^2$) | (μm) |
| Ex61 | 18,9 | 52,9 | -57,8 | 11,0 | 23,3 | 121,2 | -14,5 | -272,2 | -130,9 |
| Ex62 | 18,8 | 54,9 | -55,0 | 9,9 | 22,1 | 116,8 | -21,2 | -428,5 | -131,7 |
| Ex63 | 18,0 | 51,3 | -54,0 | 9,2 | 20,9 | 101,2 | -14,5 | -272,2 | -118,8 |
| Ex64 | 21,0 | 70,3 | -52,6 | 7,3 | 21,0 | 90,5 | -16,4 | -313,4 | -121,2 |
| Ex65 | 17,8 | 46,0 | -58,0 | 10,9 | 22,5 | 119,9 | -14,5 | -272,2 | -127,0 |
| Ex66 | 21,0 | 68,7 | -54,3 | 7,7 | 21,4 | 91,7 | -14, 5 | -272,2 | -121,5 |
| Ex67 | 20,1 | 62,2 | -55,6 | 9,8 | 22,9 | 113,6 | -14,5 | -272,2 | -129,2 |
| Ex68 | 16,5 | 44,3 | -52,5 | 11,7 | 22,4 | 122,9 | -14,5 | -272,2 | -126,6 |
| Ex69 | 18,4 | 54,7 | -53,0 | 10,8 | 22,7 | 128,7 | -18,3 | -358,1 | -131,8 |
| Ex70 | 18,2 | 51,1 | -55,5 | 10,3 | 22,1 | 111,9 | -20,6 | -430,5 | -131,1 |
| Ex71 | 24,2 | 92,4 | -49,4 | 3,8 | 19,5 | 50,5 | -25,1 | -535,0 | -122,8 |
| Ex72 | 21,7 | 72,1 | -54,6 | 7,2 | 21,2 | 85,7 | -18,0 | -355,5 | -124,2 |
| Ex73 | 20,7 | 73,5 | -47,4 | 5,5 | 18,9 | 69,6 | -25,1 | -535,0 | -119,6 |
| Ex74 | 21,1 | 72,8 | -50,7 | 6,9 | 20,6 | 90,0 | -30,0 | -652,8 | -132,9 |
| Ex75 | 20,2 | 67,4 | -51,0 | 5,5 | 18,7 | 70,9 | -30,0 | -652,8 | -123,4 |
| Ex76 | 18,4 | 54,8 | -52,6 | 9,5 | 21,5 | 107,4 | -20,6 | -430,5 | -127,9 |
| Ex77 | 24,3 | 91,1 | -51,3 | 5,8 | 21,6 | 75,3 | -16,4 | -313,4 | -124,3 |
| Ex78 | 21,4 | 71,8 | -53,5 | 7,5 | 21,4 | 87,4 | -18,0 | -355,5 | -125,1 |
| Ex79 | 18,4 | 54,8 | -53,1 | 11,1 | 23,1 | 125,6 | -16,4 | -313,4 | -131,7 |

(continued)

| N° | $V_{01}$ | $V_{11}$ | $K_1$ | $V_{02}$ | $K_2$ | $V_{12}$ | $V_{03}$ | $V_{13}$ | $K_3$ |
|---|---|---|---|---|---|---|---|---|---|
| (Units) | ($\mu m$) | ($\mu m^2$) | ($\mu m^2$) | ($\mu m$) | ($\mu m$) | ($\mu m^2$) | ($\mu m$) | ($\mu m^2$) | ($\mu m$) |
| Ex80 | 20,4 | 68,6 | -50,6 | 7,7 | 21,0 | 94,9 | -21,2 | -428,5 | -126,0 |
| Ex81 | 20,5 | 71,7 | -48,2 | 5,7 | 19,0 | 70,8 | -25,1 | -535,0 | -120,1 |
| Ex82 | 20,7 | 70,1 | -51,3 | 5,5 | 19,0 | 68,5 | -25,1 | -535,0 | -120,1 |
| Ex83 | 21,0 | 74,1 | -48,8 | 7,2 | 20,8 | 93,7 | -24,7 | -510,5 | -128,9 |
| Ex84 | 20,8 | 71,9 | -49,6 | 6,8 | 20,3 | 86,1 | -24,7 | -510,5 | -126,2 |
| Ex85 | 19,1 | 57,4 | -54,2 | 8,6 | 21,0 | 103,1 | -24,7 | -510,5 | -129,5 |
| Ex86 | 22,9 | 77,8 | -56,3 | 6,1 | 21,0 | 74,8 | -20,6 | -430,5 | -125,8 |
| Ex87 | 19,8 | 65,8 | -50,2 | 6,4 | 19,3 | 77,9 | -30,0 | -652,8 | -126,3 |
| Ex88 | 23,0 | 80,9 | -53,9 | 7,3 | 22,3 | 96,8 | -18,3 | -358,1 | -129,9 |
| Ex89 | 23,4 | 86,5 | -50,6 | 6,4 | 21,6 | 82,2 | -16,4 | -313,4 | -124,5 |
| Ex90 | 22,3 | 79,4 | -50,9 | 5,8 | 20,3 | 71,9 | -18,0 | -355,5 | -119,6 |
| Ex91 | 20,5 | 65,6 | -54,4 | 7,6 | 20,9 | 95,6 | -24,7 | -510,5 | -129,4 |
| Ex92 | 18,2 | 54,4 | -52,0 | 8,7 | 20,6 | 99,3 | -25,1 | -535,0 | -127,9 |
| Ex93 | 21,0 | 71,3 | -51,8 | 7,2 | 20,9 | 89,1 | -24,7 | -510,5 | -129,0 |
| Ex94 | 23,4 | 81,4 | -55,6 | 7,2 | 22,5 | 87,7 | -14,5 | -272,2 | -126,9 |

[Table 13]

| N° | ZDW | ZDS | CD 1267.5 | CD 1310 | CD 1374.5 | MFD 1310 | MFD 1550 | Cable Cutoff |
|---|---|---|---|---|---|---|---|---|
| (Units) | (nm) | (ps/(nm$^2$.km)) | (ps/(nm.km)) | (ps/(nm.km)) | (ps/(nm.km)) | ($\mu m$) | ($\mu m$) | (nm) |
| Ex61 | 1354 | 0,096 | -9,3 | -4,5 | 2,0 | 8,90 | 10,24 | 1247 |
| Ex62 | 1350 | 0,098 | -9,0 | -4,2 | 2,4 | 9,16 | 10,52 | 1244 |
| Ex63 | 1352 | 0,094 | -8,9 | -4,2 | 2,1 | 8,87 | 10,20 | 1170 |
| Ex64 | 1348 | 0,094 | -8,4 | -3,8 | 2,5 | 8,84 | 10,13 | 1200 |
| Ex65 | 1352 | 0,099 | -9,4 | -4,5 | 2,2 | 9,18 | 10,58 | 1209 |
| Ex66 | 1342 | 0,096 | -7,9 | -3,3 | 3,0 | 9,03 | 10,30 | 1212 |
| Ex67 | 1342 | 0,097 | -8,0 | -3,3 | 3,1 | 9,16 | 10,44 | 1259 |
| Ex68 | 1341 | 0,096 | -7,8 | -3,2 | 3,1 | 9,16 | 10,45 | 1224 |
| Ex69 | 1350 | 0,095 | -8,7 | -4,0 | 2,3 | 9,04 | 10,39 | 1239 |
| Ex70 | 1354 | 0,095 | -9,0 | -4,4 | 2,0 | 8,86 | 10,20 | 1260 |
| Ex71 | 1342 | 0,093 | -7,6 | -3,1 | 3,0 | 8,64 | 9,82 | 1244 |
| Ex72 | 1347 | 0,095 | -8,3 | -3,7 | 2,6 | 8,82 | 10,08 | 1233 |
| Ex73 | 1340 | 0,094 | -7,5 | -3,0 | 3,2 | 8,97 | 10,21 | 1200 |
| Ex74 | 1345 | 0,096 | -8,2 | -3,6 | 2,8 | 9,10 | 10,40 | 1246 |
| Ex75 | 1354 | 0,092 | -8,7 | -4,3 | 1,9 | 8,62 | 9,92 | 1175 |
| Ex76 | 1343 | 0,096 | -8,0 | -3,4 | 3,0 | 9,18 | 10,48 | 1260 |
| Ex77 | 1342 | 0,094 | -7,7 | -3,1 | 3,0 | 8,77 | 9,97 | 1252 |
| Ex78 | 1341 | 0,092 | -7,4 | -3,0 | 3,0 | 8,65 | 9,83 | 1256 |
| Ex79 | 1342 | 0,094 | -7,7 | -3,2 | 3,0 | 9,02 | 10,29 | 1259 |

(continued)

| N° | ZDW | ZDS | CD 1267.5 | CD 1310 | CD 1374.5 | MFD 1310 | MFD 1550 | Cable Cutoff |
|---|---|---|---|---|---|---|---|---|
| (Units) | (nm) | (ps/(nm$^2$.km)) | (ps/(nm.km)) | (ps/(nm.km)) | (ps/(nm.km)) | (μm) | (μm) | (nm) |
| Ex80 | 1342 | 0,095 | -7,8 | -3,2 | 3,0 | 9,00 | 10,26 | 1240 |
| Ex81 | 1341 | 0,093 | -7,4 | -3,0 | 3,1 | 8,83 | 10,06 | 1204 |
| Ex82 | 1350 | 0,092 | -8,3 | -3,9 | 2,2 | 8,61 | 9,88 | 1185 |
| Ex83 | 1342 | 0,095 | -7,8 | -3,2 | 3,1 | 9,06 | 10,33 | 1247 |
| Ex84 | 1341 | 0,092 | -7,3 | -3,0 | 3,1 | 8,76 | 9,97 | 1239 |
| Ex85 | 1359 | 0,092 | -9,3 | -4,8 | 1,4 | 8,61 | 9,95 | 1211 |
| Ex86 | 1352 | 0,093 | -8,7 | -4,2 | 2,1 | 8,63 | 9,89 | 1245 |
| Ex87 | 1342 | 0,090 | -7,3 | -3,0 | 2,9 | 8,63 | 9,83 | 1220 |
| Ex88 | 1350 | 0,094 | -8,6 | -4,0 | 2,3 | 8,83 | 10,13 | 1250 |
| Ex89 | 1341 | 0,093 | -7,6 | -3,1 | 3,1 | 8,79 | 10,01 | 1252 |
| Ex90 | 1341 | 0,094 | -7,6 | -3,1 | 3,1 | 8,84 | 10,06 | 1226 |
| Ex91 | 1359 | 0,093 | -9,3 | -4,8 | 1,5 | 8,60 | 9,93 | 1216 |
| Ex92 | 1348 | 0,093 | -8,2 | -3,7 | 2,4 | 8,80 | 10,09 | 1222 |
| Ex93 | 1341 | 0,090 | -7,3 | -3,0 | 3,0 | 8,61 | 9,80 | 1257 |
| Ex94 | 1347 | 0,093 | -8,2 | -3,6 | 2,6 | 8,65 | 9,87 | 1260 |

[Table 14]

| N° | R15BL at 1550 | R10BL at 1550 | R7.5BL at 1550 | R15BL at 1625 | R10BL at 1625 | R7.5BL at 1625 | BL Type |
|---|---|---|---|---|---|---|---|
| (Units) | (dB/10turn) | (dB/turn) | (dB/turn) | (dB/10turn) | (dB/turn) | (dB/turn) | |
| Ex61 | 0.009 | 0.07 | 0.54 | 0.057 | 0.23 | 1.24 | A1 |
| Ex62 | 0.037 | 0.12 | 0.58 | 0.180 | 0.34 | 1.16 | A1 |
| Ex63 | 0.072 | 0.25 | 1.22 | 0.370 | 0.70 | 2.49 | A1 |
| Ex64 | 0.021 | 0.11 | 0.63 | 0.121 | 0.33 | 1.38 | A1 |
| Ex65 | 0.098 | 0.32 | 1.53 | 0.459 | 0.84 | 2.97 | A1 |
| Ex66 | 0.027 | 0.14 | 0.81 | 0.149 | 0.40 | 1.73 | A1 |
| Ex67 | 0.011 | 0.08 | 0.60 | 0.067 | 0.25 | 1.34 | A1 |
| Ex68 | 0.035 | 0.17 | 0.95 | 0.183 | 0.47 | 1.97 | A1 |
| Ex69 | 0.021 | 0.11 | 0.65 | 0.117 | 0.32 | 1.37 | A1 |
| Ex70 | 0.008 | 0.04 | 0.25 | 0.048 | 0.14 | 0.57 | **A2** |
| Ex71 | 0.002 | 0.01 | 0.09 | 0.013 | 0.05 | 0.22 | **A2** |
| Ex72 | 0.008 | 0.05 | 0.33 | 0.050 | 0.16 | 0.77 | **A2** |
| Ex73 | 0.027 | 0.07 | 0.28 | 0.136 | 0.20 | 0.58 | **A2** |
| Ex74 | 0.015 | 0.04 | 0.19 | 0.078 | 0.13 | 0.38 | **A2** |
| Ex75 | 0.019 | 0.05 | 0.18 | 0.103 | 0.13 | 0.37 | **A2** |
| Ex76 | 0.021 | 0.08 | 0.38 | 0.107 | 0.22 | 0.80 | **A2** |
| Ex77 | 0.002 | 0.02 | 0.23 | 0.013 | 0.08 | 0.57 | **A2** |
| Ex78 | 0.001 | 0.02 | 0.15 | 0.010 | 0.06 | 0.39 | **A2** |

(continued)

| N° | R15BL at 1550 | R10BL at 1550 | R7.5BL at 1550 | R15BL at 1625 | R10BL at 1625 | R7.5BL at 1625 | BL Type |
|---|---|---|---|---|---|---|---|
| (Units) | (dB/10turn) | (dB/turn) | (dB/turn) | (dB/10turn) | (dB/turn) | (dB/turn) | |
| Ex79 | 0.006 | 0.06 | 0.43 | 0.042 | 0.18 | 0.98 | **A2** |
| Ex80 | 0.013 | 0.06 | 0.35 | 0.076 | 0.19 | 0.76 | **A2** |
| Ex81 | 0.014 | 0.05 | 0.21 | 0.080 | 0.14 | 0.46 | **A2** |
| Ex82 | 0.013 | 0.04 | 0.20 | 0.079 | 0.14 | 0.45 | **A2** |
| Ex83 | 0.014 | 0.06 | 0.29 | 0.075 | 0.17 | 0.62 | **A2** |
| Ex84 | 0.005 | 0.03 | 0.18 | 0.032 | 0.10 | 0.41 | **A2** |
| Ex85 | 0.012 | 0.05 | 0.27 | 0.074 | 0.16 | 0.59 | **A2** |
| Ex86 | 0.003 | 0.02 | 0.15 | 0.020 | 0.07 | 0.37 | **A2** |
| Ex87 | 0.004 | 0.02 | 0.10 | 0.029 | 0.06 | 0.23 | **A2** |
| Ex88 | 0.004 | 0.04 | 0.31 | 0.030 | 0.13 | 0.75 | **A2** |
| Ex89 | 0.002 | 0.02 | 0.24 | 0.015 | 0.09 | 0.60 | **A2** |
| Ex90 | 0.008 | 0.05 | 0.33 | 0.053 | 0.17 | 0.76 | **A2** |
| Ex91 | 0.008 | 0.04 | 0.23 | 0.053 | 0.13 | 0.52 | **A2** |
| Ex92 | 0.012 | 0.05 | 0.21 | 0.070 | 0.14 | 0.47 | **A2** |
| Ex93 | 0.001 | 0.01 | 0.11 | 0.011 | 0.05 | 0.27 | **A2** |
| Ex94 | 0.001 | 0.01 | 0.18 | 0.007 | 0.06 | 0.48 | **A2** |

The ranges of the values of the different parameters used in the 94 examples listed in the above tables are presented hereinafter, in **[Table 15], [Table 16], [Table 17]** and **[Table 18].**

**[Table 15]**

| Parameter | $r_0/r_1$ | $r_0$ | $r_1$ | $r_{eq}$ | $r_2$ | $r_3$ | $\Delta n_0$ | $\Delta n_2$ | $\Delta n_3$ |
|---|---|---|---|---|---|---|---|---|---|
| Unit | | μm | μm | μm | μm | μm | (x1000) | (x1000) | (x1000) |
| Minimum value | 0.05 | 0.19 | 2.61 | 1.94 | 7.83 | 10.88 | 5.86 | 1.18 | -8.39 |
| Maximum value | 0.95 | 2.99 | 5.06 | 3.26 | 8.70 | 13.05 | 8.42 | 2.39 | -3.95 |

**[Table 16]**

| Parameter | $V_{01}$ | $V_{11}$ | $V_{02}$ | $V_{12}$ | $V_{03}$ | $V_{13}$ | $K_1$ | $K_2$ | $K_3$ |
|---|---|---|---|---|---|---|---|---|---|
| Unit | (μm) | (μm$^2$) | (μm$^2$) | (μm) | (μm) | (μm$^2$) | (μm) | (μm$^2$) | (μm) |
| Minimum value | 16.3 | 42.4 | 3.8 | 50.5 | -30 | -652.8 | -58.3 | 18.7 | -132.9 |
| Maximum value | 24.3 | 92.4 | 11.8 | 128.7 | -14.5 | -277.2 | -47.4 | 23.3 | -118.8 |

**[Table 17]**

| Parameter | ZDW | ZDS | CD 1267.5 | CD 1310 | CD 1374.5 | MFD 1310 | MFD 1550 | Cable cutoff |
|---|---|---|---|---|---|---|---|---|
| Unit | nm | ps/(nm$^2$.km) | ps/(nm$^2$-km) | ps/(nm$^2$.km) | ps/(nm$^2$.km) | μm | μm | nm |
| Minimum value | 1340 | 0.090 | -9.5 | -4.8 | 1.4 | 8.6 | 9.8 | 1170 |

(continued)

| Parameter | ZDW | ZDS | CD 1267.5 | CD 1310 | CD 1374.5 | MFD 1310 | MFD 1550 | Cable cutoff |
|---|---|---|---|---|---|---|---|---|
| Unit | nm | ps/(nm$^2$.km) | ps/(nm$^2$-km) | ps/(nm$^2$.km) | ps/(nm$^2$.km) | $\mu$m | $\mu$m | nm |
| Maximum value | 1359 | 0.099 | -7.3 | -3 | 3.2 | 9.2 | 10.6 | 1260 |

**[Table 18]**

| Parameter | R15BL at 1550 | R10BL at 1550 | R7.5BL at 1550 | R15BL at 1625 | R10BL at 1625 | R7.5BL at 1625 |
|---|---|---|---|---|---|---|
| (Units) | (dB/10turn) | (dB/turn) | (dB/turn) | (dB/10turn) | (dB/turn) | (dB/turn) |
| Minimum value | 0.001 | 0.013 | 0.090 | 0.007 | 0.048 | 0.224 |
| Maximum value | 0.150 | 0.32 | 1.53 | 0.64 | 0.84 | 2.97 |

Thus, it can be observed from the examples of **[Table 3]** to **[Table 14]** and the ranges presented in **[Table 15]** to **[Table 18],** that the parameters of radiuses and indexes of the core and cladding of the optical fiber according to the invention, allow to obtain a ZDW which is shifted towards higher wavelengths compared to prior art optical fibers according to the G.652 and G.657 recommendations.

Indeed, the standard fibers, according to the G.657.A1 recommendation, present a ZDW comprised between 1300 and 1324nm, while the optical fiber according to the invention presents a ZDW comprised between 1340 and 1359nm, as illustrated by **[Table 17].** Such a shift in the ZDW allows to obtain an optical fiber optimized for a use in the O- and E-bands.

Furthermore, the Zero Dispersion Slope (ZDS) of the optical fibers according to the invention is mostly below 0.092 ps/(nm$^2$.km) in Examples 1 to 94, contrarily to the G652 or G657 attributes. Therefore, the optical fibers according to the invention are not compliant with chromatic dispersion attributes of G652 and G657, in particular for the ZDW which is completely different, and for the ZDS in most of the cases.

Moreover, the present invention also allows to obtain an optical fiber with an MFD, a cable cutoff, and bend losses similar to the ones of the G.652 and G.657 recommendations. More particularly, as illustrated by **[Table 1]** and **[Table 18],** the optical fibers according to the invention comply with the macrobend requirements of G657A1 or G657A2.

Therefore, the present invention allows to obtain a single-mode optical fiber similar to the standard optical fibers of the G.652 and G.657 recommendations, but optimized to operate with higher wavelength in the O- and E- bands due to a higher ZDW which is obtained with specific radiuses ($r_0$, $r_1$, $r_2$, $r_3$) and indexes ($\Delta n_0$, $\Delta n_2$, $\Delta n_3$) in the core 10 and cladding 20 of the optical fiber 1.

**Claims**

1. A single-mode optical fiber comprising:

    - a core (10) having a refractive index n, wherein the core comprises a region in which the value of n decreases from a value $n_0$ at a radius $r_0$, to a value $n_2$ at a radius $r_1$; and
    - a cladding (20) having a refractive index n', said cladding comprising:

        ◦ a first layer of cladding (21) wherein the refractive index n' is equal to $n_2$; and
        ◦ a second layer of cladding (22) wherein the refractive index n' is equal to a value $n_3$ lower than $n_2$; and
        ◦ a third layer of cladding (23) wherein the refractive index n' is equal to a value $n_4$ higher than $n_3$;

    **wherein** the core radius $r_1$ is comprised between 2.5 $\mu$m and 5.5 $\mu$m; and
    **wherein** a refractive-index difference $\Delta n_0 = n_0 - n_4$ is higher than $5.8 \times 10^{-3}$; and
    **wherein** a refractive-index difference $\Delta n_2 = n_2 - n_4$ is between $1 \times 10^{-3}$ and $2.5 \times 10^{-3}$; and
    **wherein** a refractive-index difference $\Delta n_3 = n_3 - n_4$ is lower than 0; and
    **characterized in that**
    the refractive-index profile of the core and cladding is defined by the following profile parameters:

$$K_1 = V_{11} - 5{,}85 \times V_{01}$$

$$K_2 = V_{02} + 0{,}65 \times V_{01}$$

$$K_3 = V_{03} - 5 \times K_2$$

where

$V_{01}$ is a surface integral of the core;

$V_{11}$ is a volume integral of the core;

$V_{02}$ is a surface integral of the first layer of cladding;

$V_{03}$ is a surface integral of the second layer of cladding;

and **wherein** said parameters respect the following inequalities:

$$-59 < K_1 < -47$$

$$18 < K_2 < 24$$

$$-133 < K_3 < -118$$

2. The single-mode optical fiber according to claim 1, **wherein** the third layer of cladding (23) is composed of silica.

3. The single-mode optical fiber according to any of the preceding claims, **wherein** the profile of the refractive index of the core is trapezoidal, with a ratio comprised between 0 and 1, and preferably between 0,05 and 0,95, wherein said ratio is equal to $r_0/r_1$.

4. The single-mode optical fiber according to any of the preceding claims, **wherein** the profile of the refractive index or the core presents rounded edges.

5. The single-mode optical fiber according to any of the preceding claims, **wherein** the profile of the refractive index of the core presents an inner central depressed zone, from the center of the core to the radius $r_D$, wherein $r_D$ is lower than $r_0$, and wherein the refractive index n of the core, presents a minimum value at the center of the core equal to $n_{0D}$, wherein $n_{0D}$ is lower than $n_0$.

6. The single-mode optical fiber according to any of the preceding claims, **wherein** the region with decrease of refractive index is obtained by gradually changing a concentration of at least two dopants.

7. The single-mode optical fiber according to the preceding claim, **wherein** the at least two dopants are chosen among the following elements and/or molecules:

   - germanium oxide ($GeO_2$);
   - fluorine (F);
   - phosphorus oxide ($P_XO_Y$);
   - boron oxide ($B_XO_Y$);
   - aluminum oxide ($Al_2O_3$).

8. The single-mode optical fiber according to any of the preceding claims, **wherein** said optical fiber has a Chromatic Dispersion comprised between -9 and +3 ps/(nm.km) in the range of wavelength from 1268 to 1375nm.

9. The single-mode optical fiber according to any of the preceding claims, **wherein** said optical fiber has a Mode Field Diameter (MFD) at a 1310nm wavelength which is comprised between 8,6 and 9,2$\mu$m and preferably at 9$\mu$m.

10. The single-mode optical fiber according to any of the preceding claims, **wherein** said optical fiber has a Cable cut-off wavelength comprised between 1170nm and 1260nm.

11. The single-mode optical fiber according to any of the preceding claims, **wherein** said optical fiber has a Zero Dispersion Wavelength comprised between 1340 and 1360nm.

**12.** An optical fiber transmission system **wherein** it comprises at least one single-mode optical fiber according to any of the preceding claims.

**13.** The optical fiber transmission system according to claim 12, **wherein** said transmission system has a maximum Transmitter Dispersion Penalty of 1,5dB.

**Patentansprüche**

**1.** Singlemode-Lichtleiter, umfassend:

- einen Kern (10) mit einem Brechungsindex n, wobei der Kern einen Bereich umfasst, in dem der Wert von n von einem Wert $n_0$ mit einem Radius $r_0$ auf einen Wert $n_2$ mit einem Radius $r_1$ abnimmt; und
- eine Ummantelung (20) mit einem Brechungsindex n', wobei die Ummantelung umfasst:

o eine erste Ummantelungsschicht (21), wobei der Brechungsindex n' gleich $n_2$ ist; und
o eine zweite Ummantelungsschicht (22), wobei der Brechungsindex n' gleich einem Wert $n_3$ ist, der kleiner als $n_2$ ist;
o eine dritte Ummantelungsschicht (23), wobei der Brechungsindex n' gleich einem Wert $n_4$ ist, der größer als $n_3$ ist;

**wobei** der Kernradius $r_1$ zwischen 2,5 $\mu$m und 5,5 $\mu$m beträgt; und
**wobei** eine Brechungsindexdifferenz $\Delta n_0 = n_0 - n_4$ größer als $5,8 \times 10^{-3}$ ist; und
**wobei** eine Brechungsindexdifferenz $\Delta n_2 = n_2 - n_4$ zwischen $1 \times 10^{-3}$ und $2,5 \times 10^{-3}$ liegt; und
**wobei** eine Brechungsindexdifferenz $\Delta n_3 = n_3 - n_4$ kleiner als 0 ist; und
**dadurch gekennzeichnet, dass** das Brechungsindexprofil des Kerns und der Ummantelung durch die folgenden Profilparameter definiert wird:

$$K_1 = V_{11} - 5,85 \times V_{01}$$

$$K_2 = V_{02} + 0,65 \times V_{01}$$

$$K_3 = V_{03} - 5 \times K_2$$

wobei
$V_{01}$ ein Flächenintegral des Kerns ist;
$V_{11}$ ein Volumenintegral des Kerns ist;
$V_{02}$ ein Oberflächenintegral der ersten Ummantelungsschicht ist;
$V_{03}$ ein Oberflächenintegral der zweiten Ummantelungsschicht ist;
und **wobei** die Parameter die folgenden Ungleichheiten berücksichtigen:

$$-59 < K_1 < -47$$

$$18 < K_2 < 24$$

$$-133 < K_3 < -118$$

**2.** Singlemode-Lichtleiter nach Anspruch 1, **wobei** die dritte Ummantelungsschicht (23) aus Siliziumdioxid besteht.

**3.** Singlemode-Lichtleiter nach einem der vorhergehenden Ansprüche, **wobei** das Profil des Brechungsindex des Kerns trapezförmig ist, mit einem Verhältnis zwischen 0 und 1, und vorzugsweise zwischen 0,05 und 0,95, wobei das Verhältnis gleich $r_0/r_1$ ist.

4. Singlemode-Lichtleiter nach einem der vorhergehenden Ansprüche, **wobei** das Profil des Brechungsindex des Kerns abgerundete Kanten aufweist.

5. Singlemode-Lichtleiter nach einem der vorhergehenden Ansprüche, **wobei** das Profil des Brechungsindex des Kerns eine innere zentrale Vertiefungszone aufweist, von der Mitte des Kerns bis zum Radius $r_D$, wobei $r_D$ kleiner als $r_0$ ist, und wobei der Brechungsindex n des Kerns einen Mindestwert in der Mitte des Kerns gleich $n_{0D}$ aufweist, wobei $n_{0D}$ kleiner als $n_0$ ist.

6. Singlemode-Lichtleiter nach einem der vorhergehenden Ansprüche, **wobei** der Bereich mit einem abnehmenden Brechungsindex durch ein schrittweises Ändern einer Konzentration von mindestens zwei Dotierstoffen erhalten wird.

7. Singlemode-Lichtleiter nach dem vorhergehenden Anspruch, **wobei** die mindestens zwei Dotierstoffe aus den folgenden Elementen und/oder Molekülen ausgewählt sind:

   - Germaniumoxid ($GeO_2$);
   - Fluor (F);
   - Phosphoroxid ($P_XO_Y$);
   - Boroxid ($B_XO_Y$);
   - Aluminiumoxid ($Al_2O_3$).

8. Singlemode-Lichtleiter nach einem der vorhergehenden Ansprüche, **wobei** der Lichtleiter eine chromatische Dispersion aufweist, die zwischen -9 und +3 ps/(nm.km) im Wellenlängenbereich von 1268 bis 1375 nm beträgt.

9. Singlemode-Lichtleiter nach einem der vorhergehenden Ansprüche, **wobei** der Lichtleiter einen Modenfelddurchmesser (MFD) bei einer Wellenlänge von 1310 nm aufweist, der zwischen 8,6 und 9,2 $\mu$m und vorzugsweise bei 9 $\mu$m liegt.

10. Singlemode-Lichtleiter nach einem der vorhergehenden Ansprüche, **wobei** der Lichtleiter eine Kabelabschnittswellenlänge zwischen 1170 nm und 1260 nm aufweist.

11. Singlemode-Lichtleiter nach einem der vorhergehenden Ansprüche, **wobei** der Lichtleiter eine Nulldispersionswellenlänge zwischen 1340 und 1360 nm aufweist.

12. Lichtleiter-Übertragungssystem, **wobei** es mindestens einen Singlemode-Lichtleiter nach einem der vorhergehenden Ansprüche umfasst.

13. Lichtleiter-Übertragungssystem nach Anspruch 12, **wobei** das Übertragungssystem eine maximale Senderdispersionsstrafe von 1,5 dB aufweist.

**Revendications**

1. Fibre optique monomode comprenant :

   - une âme (10) ayant un indice de réfraction n, dans laquelle l'âme comprend une région dans laquelle la valeur de n diminue d'une valeur $n_0$ à un rayon $r_0$, jusqu'à une valeur $n_2$ à un rayon $r_1$ ; et
   - un revêtement (20) ayant un indice de réfraction n', ledit revêtement comprenant :

      o une première couche de revêtement (21) dans laquelle l'indice de réfraction n'est égal à $n_2$ ; et
      o une deuxième couche de revêtement (22) dans laquelle l'indice de réfraction n' est égal à une valeur $n_3$ inférieure à $n_2$ ;
      o une troisième couche de revêtement (23) dans laquelle l'indice de réfraction n'est égal à une valeur $n_4$ supérieure à $n_3$ ;

   dans laquelle le rayon d'âme $r_1$ est compris entre 2,5 $\mu$m et 5,5 $\mu$m ; et
   dans laquelle une différence d'indice de réfraction $\Delta n_0 = n_0 - n_4$ est supérieure à $5,8 \times 10^{-3}$ ; et
   dans laquelle une différence d'indice de réfraction $\Delta n_2 = n_2 - n_4$ est comprise entre $1 \times 10^{-3}$ et $2,5 \times 10^{-3}$ ; et

dans laquelle une différence d'indice de réfraction $\Delta n_3 = n_3 - n_4$ est inférieure à 0 ; et
**caractérisé en ce que** le profil d'indice de réfraction de l'âme et du revêtement est défini par les paramètres de profil suivants :

$$K_1 = V_{11} - 5{,}85 \times V_{01}$$

$$K_2 = V_{02} + 0{,}65 \times V_{01}$$

$$K_3 = V_{03} - 5 \times K_2$$

où
$V_{01}$ est une intégrale de surface de l'âme ;
$V_{11}$ est une intégrale de volume de l'âme ;
$V_{02}$ est une intégrale de surface de la première couche de revêtement ;
$V_{03}$ est une intégrale de surface de la deuxième couche de revêtement ;
et dans laquelle lesdits paramètres respectent les inégalités suivantes :

$$-59 < K_1 < -47$$

$$18 < K_2 < 24$$

$$-133 < K_3 < -118.$$

2. Fibre optique monomode selon la revendication 1, dans laquelle la troisième couche de revêtement (23) est composée de silice.

3. Fibre optique monomode selon l'une des revendications précédentes, dans laquelle le profil de l'indice de réfraction de l'âme est trapézoïdal, avec un ratio compris entre 0 et 1, et de préférence entre 0,05 et 0,95, dans laquelle ledit ratio est égal à $r_0/r_1$.

4. Fibre optique monomode selon l'une quelconque des revendications précédentes, dans laquelle le profil de l'indice de réfraction ou de l'âme présente des bords arrondis.

5. Fibre optique monomode selon l'une quelconque des revendications précédentes, dans laquelle le profil de l'indice de réfraction de l'âme présente une zone centrale interne déprimée, allant du centre de l'âme jusqu'au rayon $r_D$, dans laquelle $r_D$ est inférieur à $r_0$, et dans laquelle l'indice de réfraction n de l'âme présente une valeur minimale au centre de l'âme égale à $n_{0D}$, dans laquelle $n_{0D}$ est inférieur à $n_0$.

6. Fibre optique monomode selon l'une quelconque des revendications précédentes, dans laquelle la région présentant une diminution d'indice de réfraction est obtenue en modifiant progressivement une concentration d'au moins deux dopants.

7. Fibre optique monomode selon la revendication précédente, dans laquelle les au moins deux dopants sont choisis parmi les éléments et/ou molécules suivant(e)s :

   - l'oxyde de germanium ($GeO_2$) ;
   - le fluor (F) ;
   - l'oxyde de phosphore ($P_XO_Y$) ;
   - l'oxyde de bore ($B_XO_Y$) ;
   - l'oxyde d'aluminium ($Al_2O_3$).

8. Fibre optique monomode selon l'une quelconque des revendications précédentes, dans laquelle ladite fibre optique a une dispersion chromatique comprise entre -9 et +3 ps/(nm.km) dans la plage de longueurs d'onde de 1268 à 1375 nm.

9. Fibre optique monomode selon l'une quelconque des revendications précédentes, dans laquelle ladite fibre optique a un diamètre de champ de mode (MFD) à une longueur d'onde de 1310 nm qui est compris entre 8,6 et 9,2 $\mu$m et de préférence égal à 9 $\mu$m.

10. Fibre optique monomode selon l'une quelconque des revendications précédentes, dans laquelle ladite fibre optique a une longueur d'onde de coupure de câble comprise entre 1170 nm et 1260 nm.

11. Fibre optique monomode selon l'une quelconque des revendications précédentes, dans laquelle ladite fibre optique a une longueur d'onde à dispersion nulle comprise entre 1340 et 1360 nm.

12. Système de transmission par fibre optique dans lequel celui-ci comprend au moins une fibre optique monomode selon l'une quelconque des revendications précédentes.

13. Système de transmission par fibre optique selon la revendication 12, dans lequel ledit système de transmission a une pénalité de dispersion d'émetteur maximale de 1,5 dB.

Figure 1

Figure 2

Figure 3

Figure 4

Figure 5

Figure 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015092464 A
- WO 2019122943 A
- US 2011286710 A1
- WO 0227367 A1
- US 6301422 B1